# EUROPEAN PATENT APPLICATION

(11) **EP 4 787 020 A1**
(43) Date of publication of application: **05.08.2026**
(21) Application number: 23953726.9
(22) Date of filing: 28.09.2023
(51) Int. Cl.: G01S 17/04, G01S 7/48

(54) **DETECTION METHOD AND APPARATUS**

(71) Applicant: Yinwang Intelligent Technologies Co., Ltd., Shenzhen, Guangdong 518110 (CN)
(72) Inventor: HAN, Ronglei, Shenzhen, Guangdong 518129 (CN); LV, Xiaoyu, Shenzhen, Guangdong 518129 (CN); MA, Sha, Shenzhen, Guangdong 518129 (CN); LIU, Xuanzeng, Shenzhen, Guangdong 518129 (CN)
(74) Representative: Maiwald GmbH
(86) International application number: PCT/CN2023/122775
(87) International publication number: WO 2025/065579

(57) **Abstract**

Embodiments of this application provide a detection method and apparatus, and relate to detection technologies for use in fields such as intelligent driving, intelligent transportation, surveying and mapping, and intelligent manufacturing. In embodiments of this application, a controller may control a laser to emit a first laser signal to a detection area, and obtain a first echo signal that is returned from the detection area and that is received by a detector. The first echo signal is used for comprehensive detection of an entire detection area, so that a target object that may exist in the detection area can be determined as a first to-be-detected target. Then, a second echo signal from a first distance corresponding to the first to-be-detected target is extracted from the first echo signal, and the second echo signal may be used for fine detection of the target object that may exist at the first distance, thereby improving detection performance. Accordingly, detection at a specific distance can be implemented without adding an additional auxiliary apparatus such as a gated imaging device, thereby reducing hardware costs and complexity for implementing the detection at the specific distance.

## Description

### TECHNICAL FIELD

This application relates to detection technologies for use in fields such as intelligent driving, intelligent transportation, surveying and mapping, and intelligent manufacturing, and in particular, to a detection method and a related apparatus.

### BACKGROUND

A lidar can actively emit an optical signal to a target and receive a reflected optical signal from the target. A distance to the target is calculated by measuring a round-trip time of the optical signal. When a target at a specific distance needs to be detected, in a related solution, detection is implemented at the specific distance by using the lidar and a gated imaging device in collaboration.

However, the foregoing solution requires additional introduction of the gated imaging device, for example, an intensified charge coupled device (Intensified Charge Coupled Device, ICCD)/electron-multiplying charge coupled device (Electron-Multiplying Charge Coupled Device, EMCCD)/scientific complementary metal-oxide-semiconductor (scientific Complementary Metal-Oxide-Semiconductor, sCMOS) camera, results in high costs. In addition, the gated imaging device and the lidar form two independent systems, resulting in high complexity.

### SUMMARY

Embodiments of this application provide a detection method and apparatus, to reduce costs and complexity of implementing detection at a specific distance.

According to a first aspect, an embodiment of this application provides a detection method. The method includes:
controlling a laser to emit a first laser signal;
obtaining a first echo signal of the first laser signal;
determining a first to-be-detected target based on the first echo signal; and
determining a second echo signal based on the first echo signal and the first to-be-detected target, where the second echo signal is an echo signal from a first distance corresponding to the first to-be-detected target.

The method may be executed by a detection apparatus, and the detection apparatus includes a laser and a detector. Optionally, the detector may integrate functions of the controller. Optionally, the detection apparatus further includes a controller. The method may be specifically executed by the detector or the controller in the detection apparatus. For example, the detection apparatus may be a lidar.

The first to-be-detected target may be understood as a target object that may exist in a detection area, and the first distance corresponding to the first to-be-detected target is a distance between the first to-be-detected target and the detection apparatus.

In the foregoing embodiment, the controller may control the laser to emit the first laser signal to the detection area, and obtain the first echo signal that is returned from the detection area and that is received by the detector. The first echo signal is used for comprehensive detection of an entire detection area, so that the target object that may exist in the detection area can be determined as the first to-be-detected target. Then, the second echo signal from the first distance corresponding to the first to-be-detected target is extracted from the first echo signal. The second echo signal may be used for fine detection of the target object that may exist at the first distance, thereby improving detection performance. Accordingly, detection at a specific distance can be implemented by using the detection apparatus alone without adding an additional auxiliary apparatus such as a gated imaging device, thereby reducing hardware costs and complexity for implementing the detection at the specific distance.

In a possible implementation of the first aspect, obtaining the first echo signal of the first laser signal includes:
controlling a first detector to continuously receive an echo signal of the first laser signal from an emission moment of the first laser signal, to obtain the first echo signal, where the first echo signal includes a plurality of echo signals corresponding to different times.

In the foregoing implementation, a time corresponding to the echo signal is a delay of a receiving moment of the echo signal relative to the emission moment of the first laser signal. The first detector is controlled to continuously receive the echo signal of the first laser signal from the emission moment of the first laser signal, so that the first detector can receive a plurality of echo signals corresponding to different times, that is, echo signals from different distances. This helps the first detector receive all echo signals that may be returned from the detection area, thereby implementing comprehensive detection of the entire detection area.

In a possible implementation of the first aspect, determining the first to-be-detected target based on the first echo signal includes:
determining a first time based on the plurality of echo signals corresponding to the different times, where an echo signal corresponding to the first time includes a characteristic signal, and the characteristic signal includes at least one of a peak signal, a broadened signal, and a distorted signal; and
determining the first to-be-detected target based on the first time, where the first distance corresponding to the first to-be-detected target is related to the first time.

In the foregoing implementation, the echo signal including the characteristic signal may correspond to the target object in the detection area, so that the first to-be-detected target may be determined based on the echo signal including the characteristic signal. Specifically, the first distance corresponding to the first to-be-detected target may be determined based on the first time corresponding to the echo signal including the characteristic signal, to subsequently extract an echo signal from the first distance, thereby implementing fine detection at the first distance.

In a possible implementation of the first aspect, determining the second echo signal based on the first echo signal and the first to-be-detected target includes:
extracting the echo signal corresponding to the first time from the plurality of echo signals corresponding to the different times, to obtain the second echo signal.

In the foregoing implementation, the echo signal corresponding to the first time represents an echo signal from the first distance. The echo signal corresponding to the first time is extracted from the echo signals corresponding to the plurality of different times, to obtain the echo signal from the first distance, thereby implementing fine detection at the first distance.

In a possible implementation of the first aspect, the method further includes:
generating a first image based on the second echo signal, where the first image is an image at the first distance, and the first image identifies the first to-be-detected target.

In the foregoing implementation, the second echo signal is an echo signal from the first distance away from the detection apparatus, and the first image generated based on the second echo signal is an image of a slice at the first distance away from the detection apparatus. Because the first distance is also a distance between the detection apparatus and the target object (that is, the first to-be-detected target) that may exist in the detection area, the first image includes related information of the first to-be-detected target. The first image can be used to further confirm or identify the first to-be-detected target, thereby improving accuracy of a detection result and improving detection performance.

In a possible implementation of the first aspect, the method further includes:
determining a third echo signal based on the first echo signal and the first to-be-detected target, where the third echo signal is an echo signal from a second distance, and a distance difference between the second distance and the first distance is less than a first distance difference.

In the foregoing implementation, the distance difference between the second distance and the first distance is less than the first distance difference, indicating that the second distance is close to the first distance. An echo signal (that is, the third echo signal) from the second distance represents an echo signal from nearly the first distance, and may be used to perform fine detection on a target object that may exist at nearly the first distance. This helps reduce missing detection or false detection caused by interference or an error during a detection process, thereby improving detection performance.

According to a second aspect, an embodiment of this application provides a detection method. The method includes:
determining a first to-be-detected target;
controlling a laser to emit a first laser signal; and
controlling a first detector to receive an echo signal of the first laser signal at a first moment, to obtain a fourth echo signal, where the first moment is related to an emission moment of the first laser signal and a first distance corresponding to the first to-be-detected target, and the fourth echo signal is an echo signal from the first distance corresponding to the first to-be-detected target.

The method may be executed by a detection apparatus, and the detection apparatus includes a laser and a detector. Optionally, the detector may integrate functions of the controller. Optionally, the detection apparatus further includes a controller. The method may be specifically executed by the detector or the controller in the detection apparatus. For example, the detection apparatus may be a lidar.

The first to-be-detected target may be understood as a target object that may exist in a detection area, and the first distance corresponding to the first to-be-detected target is a distance between the first to-be-detected target and the detection apparatus. The emission moment of the first laser signal is a moment at which the laser emits the first laser signal. The first moment may be understood as a turn-on moment of the first detector. At this time, the first detector may receive the echo signal of the first laser signal.

In the foregoing embodiment, the controller may first determine a target object that may exist in the detection area as the first to-be-detected target, and then control the laser to emit the first laser signal to the detection area, and control the first detector to receive the echo signal of the first laser signal at the first moment. Because the first moment is related to the emission moment of the first laser signal and the first distance corresponding to the first to-be-detected target, the first detector receives the echo signal from the first distance at the first moment. The echo signal from the first distance may be used to perform fine detection on the target object that may exist at the first distance, thereby improving detection performance. Accordingly, detection at a specific distance can be implemented by using the detection apparatus alone without adding an additional auxiliary apparatus such as a gated imaging device, thereby reducing hardware costs and complexity for implementing the detection at the specific distance.

In a possible implementation of the second aspect, the first moment and the emission moment of the first laser signal are separated by a first time, and the first time is a time of flight of a laser signal corresponding to the first distance.

In the foregoing implementation, the first moment and the emission moment of the first laser signal are separated by a first time, indicating that the first moment is later than the emission moment of the first laser signal by the first time. Because the first time is the time of flight of the laser signal corresponding to the first distance, the first moment is the turn-on moment of the first detector, that is, the first detector is turned on when the echo signal from the first distance arrives at the first detector. In this way, only the echo signal from the first distance may be received, and is used to perform fine detection on the target object that may exist at the first distance. Accordingly, echo signals that need to be received and processed can be reduced, thereby reducing impact of an unrelated signal on a detection result at the first distance.

In a possible implementation of the second aspect, when the first detector is in a moving state, the first moment is further related to a moving direction and a moving speed of the first detector.

In the foregoing implementation, the first distance corresponding to the first to-be-detected target may be used as a target position, and the first distance is used as a current detection distance (that is, a current distance between the target position and the detection apparatus). The current detection distance varies with movement of the detection apparatus. Because the first moment is related to the current detection distance and a moving direction and a moving speed of the first detector, the first moment also varies. Accordingly, a detection position may remain unchanged, meaning that the first detector continuously receives an echo signal from the target position during a moving process, thereby implementing detection at a fixed position.

In a possible implementation of the second aspect, controlling the first detector to receive the echo signal of the first laser signal at the first moment, to obtain the fourth echo signal includes:
controlling the first detector to receive the echo signal of the first laser signal at the first moment M times, to obtain the fourth echo signal, where M is an integer greater than 1, and a value of M is predefined or preconfigured, or a value of M is related to the first distance.

In the foregoing implementation, the first detector may receive the echo signal of the first laser signal at the first moment a plurality of times, that is, perform detection at the first distance a plurality of times. The fourth echo signal (that is, the echo signal from the first distance) obtained by accumulating echo signals received at the first moment a plurality of times is stronger, and is used to detect the target object that may exist at the first distance, so that a more accurate detection result can be obtained, thereby improving detection performance.

In a possible implementation of the second aspect, controlling the laser to emit the first laser signal includes:
controlling the laser to sequentially emit the first laser signal to each scanning field of view according to a scanning sequence; and
controlling the first detector to receive the echo signal of the first laser signal at the first moment, to obtain the fourth echo signal includes:
   controlling a detection element corresponding to each scanning field of view in the first detector to sequentially receive the echo signal of the first laser signal at the first moment according to the scanning sequence, to obtain the fourth echo signal.

In the foregoing implementation, the scanning field of view may be understood as a sub-area in the detection area, and the scanning sequence may be predefined or preconfigured. When the first laser signal emitted by the laser sequentially illuminates each sub-area in the detection area according to the scanning sequence, detection elements in the first detector may be turned on in a time-division manner, to receive an echo signal of a corresponding sub-area. Accordingly, the laser signal used for detection may be more focused, thereby helping improve accuracy of a detection result.

In a possible implementation of the second aspect, the first detector includes a plurality of detection elements; and
controlling the first detector to receive the echo signal of the first laser signal at the first moment, to obtain the fourth echo signal includes:
controlling a first detection element group in the first detector to receive the echo signal of the first laser signal at the first moment, to obtain the fourth echo signal, where the first detection element group includes at least one of the plurality of detection elements.

The method further includes:
controlling a second detection element group in the first detector to continuously receive the echo signal of the first laser signal from the emission moment of the first laser signal, to obtain a fifth echo signal, where the second detection element group includes at least one of the plurality of detection elements, and the second detection element group does not overlap with detection elements in the first detection element group.

In the foregoing implementation, the first detection element group is configured to receive the echo signal of the first laser signal at the first moment, to obtain the echo signal (that is, the fourth echo signal) from the first distance. The second detection element group is configured to continuously receive the echo signal of the first laser signal from the emission moment of the first laser signal, to obtain the echo signal (that is, the fifth echo signal) returned from an entire detection area. In this way, the first detection element group and the second detection element group in the first detector run in different working modes, so that the first detector may simultaneously run in a plurality of working modes in different areas. Specifically, the first detector may perform comprehensive detection on an entire detection area in a free mode, and may also perform enhanced detection at a specific distance in a gated mode, so that a plurality of detection requirements can be met simultaneously, thereby improving detection performance.

In a possible implementation of the second aspect, after controlling the first detector to receive the echo signal of the first laser signal at the first moment, to obtain the fourth echo signal, the method further includes:
controlling the laser to emit a second laser signal; and
controlling the first detector to continuously receive an echo signal of the second laser signal from an emission moment of the second laser signal, to obtain a sixth echo signal.

In the foregoing implementation, after performing fine detection at the first distance, the first detector may switch the working mode, to perform comprehensive detection on the entire detection area, so that the first detector may switch between different working modes in a time-division or alternating manner. For example, the first detector may switch to the free mode after running in the gated mode for a specific time or for a specific count. For another example, the first detector may switch to the gated mode after running in the free mode for a specific time or for a specific count. In this way, a change of a detection requirement can be flexibly adapted.

In a possible implementation of the second aspect, the method further includes:
controlling a second detector to continuously receive the echo signal of the first laser signal from the emission moment of the first laser signal, to obtain a seventh echo signal, where a field of view of the second detector is aligned with that of the first detector.

In the foregoing implementation, on the basis of performing fine detection at the first distance by using the first detector, the second detector is introduced, and is configured to perform comprehensive detection on the entire detection area. That the field of view of the second detector is aligned with that of the first detector may be understood as that the second detector and the first detector perform detection on a same detection area, and detection data of the two detectors may be fused. Accordingly, the second detector may perform comprehensive detection on the entire detection area in the free mode, and the first detector may perform enhanced detection at a specific distance in the gated mode. In combination with detection data of the two detectors, a more comprehensive and accurate detection result can be obtained.

In a possible implementation of the second aspect, the method further includes:
generating a second image based on the fourth echo signal, where the second image is an image at the first distance, and the second image identifies the first to-be-detected target.

In the foregoing implementation, the fourth echo signal is an echo signal from the first distance away from the detection apparatus, and the second image generated based on the fourth echo signal is an image of a slice at the first distance away from the detection apparatus. Because the first distance is also a distance between the detection apparatus and the target object (that is, the first to-be-detected target) that may exist in the detection area, the second image includes related information of the first to-be-detected target. The second image can be used to further confirm or identify the first to-be-detected target, thereby improving accuracy of a detection result and improving detection performance.

In a possible implementation of the second aspect, the method further includes:
controlling the first detector to receive the echo signal of the first laser signal at a second moment, to obtain an eighth echo signal.

The second moment is related to the emission moment of the first laser signal and a second distance, a distance difference between the second distance and the first distance is less than a first distance difference, and the eighth echo signal is an echo signal from the second distance.

In the foregoing implementation, the distance difference between the second distance and the first distance is less than the first distance difference, indicating that the second distance is close to the first distance. The first detector is controlled to receive the echo signal of the first laser signal at the second moment. Because the second moment is related to the emission moment of the first laser signal and the second distance, the first detector receives the echo signal from the second distance at the second moment. The echo signal from the second distance represents an echo signal from nearly the first distance, which may be used to perform fine detection on the target object that may exist at nearly the first distance. This helps reduce missing detection or false detection caused by interference or an error during a detection process, thereby improving detection performance.

In a possible implementation of the second aspect, determining the first to-be-detected target includes:
obtaining related information in a detection area;
identifying, based on the related information, whether there is a target object in the detection area; and
determining the first to-be-detected target when identifying that there is a target object in the detection area.

In the foregoing implementation, the related information in the detection area may be information collected by a sensing device. The sensing device may be connected to the controller, and is configured to collect the related information in the detection area, and transmit the collected related information to the controller. The controller may perform identification based on the related information, obtain a preliminary detection result indicating whether there is a target object in the detection area, and then determine the first to-be-detected target based on the preliminary detection result.

In a possible implementation of the second aspect, determining the first to-be-detected target includes:
obtaining a preliminary detection result indicating whether there is a target object in the detection area; and
determining the first to-be-detected target when the preliminary detection result indicates that there is a target object in the detection area.

In the foregoing implementation, the preliminary detection result may be a detection result obtained by the sensing device by performing identification based on the collected related information in the detection area. The sensing device may be connected to the controller, and is configured to: collect the related information in the detection area; identify, based on the related information, whether there is a target object in the detection area; and transmit, to the controller, the preliminary detection result indicating whether there is a target object in the detection area. The controller may directly obtain the preliminary detection result without performing an identification operation, and then determine the first to-be-detected target based on the preliminary detection result.

According to a third aspect, an embodiment of this application provides a detection apparatus. The detection apparatus includes a laser, a first detector, and at least one processor. The laser is configured to emit a laser signal. The first detector is configured to receive an echo signal. The at least one processor is connected to the laser and the first detector, and is configured to implement the method described in any one of the first aspect or the possible implementations of the first aspect.

In a possible implementation of the third aspect, the at least one processor is configured to:
control the laser to emit a first laser signal;
obtain a first echo signal of the first laser signal;
determine a first to-be-detected target based on the first echo signal; and
determine a second echo signal based on the first echo signal and the first to-be-detected target, where the second echo signal is an echo signal from a first distance corresponding to the first to-be-detected target.

In a possible implementation of the third aspect, the at least one processor is further configured to:
control the first detector to continuously receive an echo signal of the first laser signal from an emission moment of the first laser signal, to obtain the first echo signal. The first echo signal includes a plurality of echo signals corresponding to different times.

In a possible implementation of the third aspect, the at least one processor is further configured to:
determine a first time based on the plurality of echo signals corresponding to the different times, where an echo signal corresponding to the first time includes a characteristic signal, and the characteristic signal includes at least one of a peak signal, a broadened signal, and a distorted signal; and
determine the first to-be-detected target based on the first time, where the first distance corresponding to the first to-be-detected target is related to the first time.

In a possible implementation of the third aspect, the at least one processor is further configured to:
extract the echo signal corresponding to the first time from the plurality of echo signals corresponding to the different times, to obtain the second echo signal.

In a possible implementation of the third aspect, the at least one processor is further configured to:
generate a first image based on the second echo signal, where the first image is an image at the first distance, and the first image identifies the first to-be-detected target.

In a possible implementation of the third aspect, the at least one processor is further configured to:
determine a third echo signal based on the first echo signal and the first to-be-detected target, where the third echo signal is an echo signal from a second distance, and a distance difference between the second distance and the first distance is less than a first distance difference.

According to a fourth aspect, an embodiment of this application provides a detection apparatus. The detection apparatus includes a laser, a first detector, and at least one processor. The laser is configured to emit a laser signal. The first detector is configured to receive an echo signal. The at least one processor is connected to the laser and the first detector, and is configured to implement the method described in any one of the second aspect or the possible implementations of the second aspect.

In a possible implementation of the fourth aspect, the at least one processor is configured to:
determine a first to-be-detected target;
control the laser to emit a first laser signal; and
control the first detector to receive an echo signal of the first laser signal at a first moment, to obtain a fourth echo signal. The first moment is related to an emission moment of the first laser signal and a first distance corresponding to the first to-be-detected target, and the fourth echo signal is an echo signal from the first distance corresponding to the first to-be-detected target.

In a possible implementation of the fourth aspect, the first moment and the emission moment of the first laser signal are separated by a first time, and the first time is a time of flight of a laser signal corresponding to the first distance.

In a possible implementation of the fourth aspect, when the first detector is in a moving state, the first moment is further related to a moving direction and a moving speed of the first detector.

In a possible implementation of the fourth aspect, the at least one processor is further configured to:
control the first detector to receive the echo signal of the first laser signal at the first moment M times, to obtain the fourth echo signal, where M is an integer greater than 1, and a value of M is predefined or preconfigured, or a value of M is related to the first distance.

In a possible implementation of the fourth aspect, the at least one processor is further configured to:
control the laser to sequentially emit the first laser signal to each scanning field of view according to a scanning sequence; and
control a detection element corresponding to each scanning field of view in the first detector to sequentially receive the echo signal of the first laser signal at the first moment according to the scanning sequence, to obtain the fourth echo signal.

In a possible implementation of the fourth aspect, the first detector includes a plurality of detection elements. The at least one processor is further configured to:
control a first detection element group in the first detector to receive the echo signal of the first laser signal at the first moment, to obtain the fourth echo signal, where the first detection element group includes at least one of the plurality of detection elements; and
control a second detection element group in the first detector to continuously receive the echo signal of the first laser signal from the emission moment of the first laser signal, to obtain a fifth echo signal, where the second detection element group includes at least one of the plurality of detection elements, and the second detection element group does not overlap with detection elements in the first detection element group.

In a possible implementation of the fourth aspect, the at least one processor is further configured to:
control the laser to emit a second laser signal; and
controlling the first detector to continuously receive an echo signal of the second laser signal from an emission moment of the second laser signal, to obtain a sixth echo signal.

In a possible implementation of the fourth aspect, the at least one processor is further configured to:
control a second detector to continuously receive the echo signal of the first laser signal from the emission moment of the first laser signal, to obtain a seventh echo signal, where a field of view of the second detector is aligned with that of the first detector.

In a possible implementation of the fourth aspect, the at least one processor is further configured to:
generate a second image based on the fourth echo signal, where the second image is an image at the first distance, and the second image identifies the first to-be-detected target.

In a possible implementation of the fourth aspect, the at least one processor is further configured to:
control the first detector to receive the echo signal of the first laser signal at a second moment, to obtain an eighth echo signal.

The second moment is related to the emission moment of the first laser signal and a second distance, a distance difference between the second distance and the first distance is less than a first distance difference, and the eighth echo signal is an echo signal from the second distance.

In a possible implementation of the fourth aspect, the at least one processor is further configured to:
obtain related information in a detection area;
identify, based on the related information, whether there is a target object in the detection area; and
determine the first to-be-detected target when identifying that there is a target object in the detection area.

In a possible implementation of the fourth aspect, the at least one processor is further configured to:
obtain a preliminary detection result indicating whether there is a target object in the detection area; and
determine the first to-be-detected target when the preliminary detection result indicates that there is a target object in the detection area.

According to a fifth aspect, an embodiment of this application provides a detection apparatus. The detection apparatus includes a laser and a first detector. The laser is configured to emit a laser signal. The first detector is configured to receive an echo signal. The first detector is further configured to implement the method described in any one of the first aspect or the possible implementations of the first aspect.

In a possible implementation of the fifth aspect, the first detector is configured to:
control the laser to emit a first laser signal;
obtain a first echo signal of the first laser signal;
determine a first to-be-detected target based on the first echo signal; and
determine a second echo signal based on the first echo signal and the first to-be-detected target, where the second echo signal is an echo signal from a first distance corresponding to the first to-be-detected target.

In a possible implementation of the fifth aspect, the first detector is further configured to:
control the first detector to continuously receive an echo signal of the first laser signal from an emission moment of the first laser signal, to obtain the first echo signal. The first echo signal includes a plurality of echo signals corresponding to different times.

In a possible implementation of the fifth aspect, the first detector is further configured to:
determine a first time based on the plurality of echo signals corresponding to the different times, where an echo signal corresponding to the first time includes a characteristic signal, and the characteristic signal includes at least one of a peak signal, a broadened signal, and a distorted signal; and
determine the first to-be-detected target based on the first time, where the first distance corresponding to the first to-be-detected target is related to the first time.

In a possible implementation of the fifth aspect, the first detector is further configured to:
extract the echo signal corresponding to the first time from the plurality of echo signals corresponding to the different times, to obtain the second echo signal.

In a possible implementation of the fifth aspect, the first detector is further configured to:
generate a first image based on the second echo signal, where the first image is an image at the first distance, and the first image identifies the first to-be-detected target.

In a possible implementation of the fifth aspect, the first detector is further configured to:
determine a third echo signal based on the first echo signal and the first to-be-detected target, where the third echo signal is an echo signal from a second distance, and a distance difference between the second distance and the first distance is less than a first distance difference.

According to a sixth aspect, an embodiment of this application provides a detection apparatus. The detection apparatus includes a laser and a first detector. The laser is configured to emit a laser signal. The first detector is configured to receive an echo signal. The first detector is further configured to implement the method described in any one of the second aspect or the possible implementations of the second aspect.

In a possible implementation of the sixth aspect, the first detector is configured to:
determine a first to-be-detected target;
control the laser to emit a first laser signal; and
control the first detector to receive an echo signal of the first laser signal at a first moment, to obtain a fourth echo signal. The first moment is related to an emission moment of the first laser signal and a first distance corresponding to the first to-be-detected target, and the fourth echo signal is an echo signal from the first distance corresponding to the first to-be-detected target.

In a possible implementation of the sixth aspect, the first moment and the emission moment of the first laser signal are separated by a first time, and the first time is a time of flight of a laser signal corresponding to the first distance.

In a possible implementation of the sixth aspect, when the first detector is in a moving state, the first moment is further related to a moving direction and a moving speed of the first detector.

In a possible implementation of the sixth aspect, the first detector is further configured to:
control the first detector to receive the echo signal of the first laser signal at the first moment M times, to obtain the fourth echo signal, where M is an integer greater than 1, and a value of M is predefined or preconfigured, or a value of M is related to the first distance.

In a possible implementation of the sixth aspect, the first detector is further configured to:
control the laser to sequentially emit the first laser signal to each scanning field of view according to a scanning sequence; and
control a detection element corresponding to each scanning field of view in the first detector to sequentially receive the echo signal of the first laser signal at the first moment according to the scanning sequence, to obtain the fourth echo signal.

In a possible implementation of the sixth aspect, the first detector includes a plurality of detection elements. The first detector is further configured to:
control a first detection element group in the first detector to receive the echo signal of the first laser signal at the first moment, to obtain the fourth echo signal, where the first detection element group includes at least one of the plurality of detection elements; and
control a second detection element group in the first detector to continuously receive the echo signal of the first laser signal from the emission moment of the first laser signal, to obtain a fifth echo signal, where the second detection element group includes at least one of the plurality of detection elements, and the second detection element group does not overlap with detection elements in the first detection element group.

In a possible implementation of the sixth aspect, the first detector is further configured to:
control the laser to emit a second laser signal; and
control the first detector to continuously receive an echo signal of the second laser signal from an emission moment of the second laser signal, to obtain a sixth echo signal.

In a possible implementation of the sixth aspect, the first detector is further configured to:
control a second detector to continuously receive the echo signal of the first laser signal from the emission moment of the first laser signal, to obtain a seventh echo signal, where a field of view of the second detector is aligned with that of the first detector.

In a possible implementation of the sixth aspect, the first detector is further configured to:
generate a second image based on the fourth echo signal, where the second image is an image at the first distance, and the second image identifies the first to-be-detected target.

In a possible implementation of the sixth aspect, the first detector is further configured to:
control the first detector to receive the echo signal of the first laser signal at a second moment, to obtain an eighth echo signal.

The second moment is related to the emission moment of the first laser signal and a second distance, a distance difference between the second distance and the first distance is less than a first distance difference, and the eighth echo signal is an echo signal from the second distance.

In a possible implementation of the sixth aspect, the first detector is further configured to:
obtain related information in a detection area;
identify, based on the related information, whether there is a target object in the detection area; and
determine the first to-be-detected target when identifying that there is a target object in the detection area.

In a possible implementation of the sixth aspect, the first detector is further configured to:
obtain a preliminary detection result indicating whether there is a target object in the detection area; and
determine the first to-be-detected target when the preliminary detection result indicates that there is a target object in the detection area.

According to a seventh aspect, an embodiment of this application provides a processing apparatus. The processing apparatus includes at least one processor and a communication interface. The communication interface is configured to provide an instruction or data input and/or output for the at least one processor, and the at least one processor is configured to implement the method described in any one of the first aspect, the second aspect, or the possible implementations of the first aspect and the second aspect.

According to an eighth aspect, an embodiment of this application provides a terminal. The terminal is configured to implement the method described in any one of the first aspect, the second aspect, or the possible implementations of the first aspect and the second aspect.

Optionally, the terminal may be a terminal such as a vehicle, an uncrewed aerial vehicle, or a robot.

According to a ninth aspect, an embodiment of this application provides a terminal. The terminal includes the detection apparatus described in any one of the third aspect to the sixth aspect or the possible implementations of the third aspect to the sixth aspect, and/or the terminal includes the processing apparatus described in the seventh aspect.

According to a tenth aspect, an embodiment of this application provides a chip. The chip includes a processor. The processor is configured to execute a computer program or instructions. When the processor executes the computer program or the instructions, the method according to any one of the first aspect, the second aspect, or the possible implementations of the first aspect and the second aspect is implemented. Optionally, the chip further includes a communication interface. The communication interface is configured to provide an input/output for the processor, and/or the communication interface is configured to send and/or receive data.

According to an eleventh aspect, an embodiment of this application provides a computer-readable storage medium. The computer-readable storage medium stores a computer program or instructions. When the computer program or the instructions are executed, the method according to any one of the first aspect, the second aspect, or the possible implementations of the first aspect and the second aspect is implemented.

According to a twelfth aspect, an embodiment of this application provides a computer program product. The computer program product includes a computer program or instructions. When the computer program or the instructions are executed, the method according to any one of the first aspect, the second aspect, or the possible implementations of the first aspect and the second aspect is implemented.

For beneficial effects brought by the third aspect to the twelfth aspect, refer to descriptions of beneficial effects in the first aspect and the second aspect. Details are not described herein.

It should be noted that the processor may be a processor (referred to as a dedicated processor for ease of differentiation) specially configured to perform these methods, or may be a processor that executes these methods by invoking a computer program, for example, a general-purpose processor. Optionally, the at least one processor may further include both a dedicated processor and a general-purpose processor.

Optionally, the computer program may be stored in a memory. For example, the memory may be a non-transitory (non-transitory) memory, for example, a read-only memory (read-only memory, ROM). The memory and the processor may be integrated on a same device, or may be separately disposed on different devices. A type of the memory and a manner of disposing the memory and the processor are not limited in embodiments of this application.

In a possible implementation, the memory is located outside the foregoing apparatus.

In another possible implementation, the memory is located inside the foregoing apparatus.

In still another possible implementation, a portion of the memory is located inside the foregoing apparatus, and the other portion of the memory is located outside the foregoing apparatus.

### BRIEF DESCRIPTION OF DRAWINGS

The following describes accompanying drawings used in embodiments of this application.
FIG. 1 is a diagram of a structure of a detection apparatus according to an embodiment of this application;
FIG. 2 is a schematic flowchart of a detection method according to an embodiment of this application;
FIG. 3 is a statistical diagram of a first sub-echo signal according to an embodiment of this application;
FIG. 4 is a schematic flowchart of another detection method according to an embodiment of this application;
FIG. 5 is a statistical diagram of a fourth sub-echo signal according to an embodiment of this application;
FIG. 6 is a diagram of detection distances according to an embodiment of this application;
FIG. 7 is a diagram of detection at a fixed detection distance according to an embodiment of this application;
FIG. 8 is a diagram of detection at a fixed target position according to an embodiment of this application;
FIG. 9 is a diagram of detection results under different detection counts according to an embodiment of this application;
FIG. 10 is a diagram of synchronously turning on a first detector according to an embodiment of this application;
FIG. 11 is a diagram of turning on a first detector in a time-division manner according to an embodiment of this application;
FIG. 12 is a diagram of division manners of a first detector according to an embodiment of this application;
FIG. 13 is a diagram of working mode switching of a first detector according to an embodiment of this application;
FIG. 14 is a diagram of joint detection by a first detector and a second detector according to an embodiment of this application;
FIG. 15 is a schematic flowchart of a detection method according to an embodiment of this application;
FIG. 16 is a diagram of a structure of a detection apparatus according to an embodiment of this application; and
FIG. 17 is a diagram of a structure of a processing apparatus according to an embodiment of this application.

### DESCRIPTION OF EMBODIMENTS

The following describes embodiments of this application in detail with reference to accompanying drawings.

For ease of understanding, the following first explains some terms in embodiments of this application.

### 1. Detection apparatus

The detection apparatus in embodiments of this application may be a lidar (or a component inside a lidar, such as a chip, an integrated circuit, or a software module), or may be another optical detection apparatus (or a component inside an optical detection apparatus, such as a chip, an integrated circuit, or a software module), for example, a fusion detection apparatus. A working principle of the detection apparatus is to detect a corresponding detection area by transmitting an optical signal to the detection area and receiving the optical signal returned from the detection area.

The detection apparatus in embodiments of this application can be used in various fields such as intelligent driving, intelligent transportation, intelligent manufacturing, environment monitoring, surveying and mapping, and uncrewed aerial vehicles, and can complete one or more functions of target detection, distance measurement, speed measurement, target tracking, imaging recognition, and the like.

The detection apparatus in embodiments of this application may be used in a vehicle-mounted detection apparatus (for example, a vehicle-mounted radar), a roadside detection apparatus (for example, an intersection radar), or the like, or may be used in another detection apparatus, for example, a detection apparatus mounted on an apparatus such as an uncrewed aerial vehicle, a robot, a railcar, a bicycle, a signal light, a speed measurement apparatus, or a base station. A mounting position of the detection apparatus is not limited in this application.

### 2. Detection area

The detection area is a physical world that can be detected, also referred to as a field of view (field of view, FOV). During detection, a line-of-sight (line of sight, LOS) area in which transmission of a signal (for example, a radio wave or laser light) is not interrupted is required between a transmit end of a detection apparatus and a target object and/or between a receive end of the detection apparatus and the target object. The line-of-sight area may be understood as a detection area. A signal from an object in the detection area may be transmitted to the receive end of the detection apparatus, and/or a signal transmitted by the transmit end of the detection apparatus may be transmitted to the object in the detection area.

### 3. Time of flight

The time of flight (time of flight, TOF) is a time taken for a laser to emit a laser signal to a target and then a detector to receive a reflected optical signal from the target. A distance between the target and a detection apparatus can be obtained based on a speed of light and the TOF. A TOF measurement technology may include a single laser pulse technology, a multi-laser pulse technology, and the like. In the single laser pulse technology, a measured time of flight is a time of returning of a single pulse, and has a high requirement on a signal-to-noise ratio (signal-to-noise ratio, SNR, or referred to as S/N). In the multi-laser pulse technology, times for returning of a plurality of pulses are measured each time, and detection data is obtained through histogram data. The multi-laser pulse technology can achieve favorable detection results under different SNRs, can implement long-range detection if the SNR is increased.

### 4. Single-photon detector

Because a laser signal emitted by a detection apparatus covers an entire detection area, and the laser signal undergoes diffuse reflection on a target in the detection area, energy of the laser signal returned from the detection area is reduced. Meanwhile, ambient light (such as sunlight, streetlights, or a laser signal from another detection apparatus) acts as noise and interferes with signal detection of the detector. In this case, because strength of a signal received by the detector is weak, the received laser signal may not be sufficient to correspond to the emitted laser signal, resulting in a large error in calculating a time of flight. Therefore, a high-sensitivity photodetector is required in a detection process to detect a weak optical signal.

The single-photon detector has the sensitivity of detecting a single photon and can be used to detect a weak optical signal. For example, the single-photon detector may be a single-photon avalanche diode (single-photon avalanche diode, SPAD).

Turning on and turning off of the SPAD are controlled by a bias voltage. When the bias voltage is higher than a specific value, the SPAD is in an on state (that is, a detectable state). When the bias voltage is lower than the value, the SPAD is in an off state (that is, an undetectable state).

When the SPAD receives an optical signal, avalanche effect is triggered. The avalanche effect is as follows: The SPAD absorbs photons and generates electron-hole pairs. The electron-hole pairs are accelerated under the influence of a strong electric field generated by a high reverse bias voltage, thereby obtaining sufficient energy. Then, the electron-hole pairs collide with a crystal lattice to initiate chain effect. As a result, a large quantity of electron-hole pairs are formed, triggering an avalanche phenomenon, and a current increases exponentially. In this case, a gain of the SPAD is theoretically infinite, and a single photon can make a photocurrent of the SPAD saturated.

When the bias voltage is decreased to a value below a breakdown voltage, the SPAD stops an avalanche (or referred to as quenching). Then, the bias voltage is restored to a value above the breakdown voltage, so that the SPAD can perform detection again. A time required for the SPAD to recover to a detectable state by quenching after the avalanche effect is triggered is referred to as a dead time. During the dead time, the SPAD cannot detect signals.

### 5. Time-to-digital converter

The time-to-digital converter (time-to-digital converter, TDC) is configured to record a time of flight of a laser signal. Each detection element in a single-photon detector may be paired with a TDC. After a laser emits a laser signal, the TDC is triggered to start timing. After the detection element detects an echo photon, the TDC is triggered again to stop timing, and outputs a time interval (that is, a timing duration) between two triggerings, which represents the time of flight of the optical signal (that is, a delay of a receiving moment of the echo photon relative to an emission moment of the laser signal).

### 6. Time-correlated single photon counting

The time-correlated single photon counting (time-correlated single photon counting, TCSPC) is a statistical detection method. During each detection, a single-photon detector outputs a binary signal indicating presence or absence of a photon, which cannot directly represent strength of an echo signal. Through a plurality of detections, echo photons with a same delay are accumulated and counted to obtain a statistical histogram. The statistical histogram may reflect distribution of echo photons with different delays. Usually, a vertical axis of the statistical histogram represents a count of echo photons, and a horizontal axis represents time.

### 7. Free mode

The free mode, also referred to as a ranging mode, is a working mode of a detector. When the detector is in the free mode, except during a dead time, the detector remains in a detectable state, or referred to as a state of being ready to receive an optical signal.

### 8. Gated mode

The gated mode is another working mode of a detector. The gated mode includes a digital gated mode and a physical gated mode. When the detector is in the digital gated mode, except during a dead time, the detector remains in a detectable state, or referred to as a state of being ready to receive an optical signal. When the detector is in the physical gated mode, the detector first remains in an off state. The detector is turned on within one or more specific time windows as needed and enters a detectable state. After completing detection, the detector returns to an off state.

The descriptions of the foregoing related concepts may be applied to the following embodiments.

The following describes an application scenario and an architecture of an embodiment of this application.

With development of information technology and computer vision, detection technologies develop rapidly, and various detection apparatuses bring great convenience to people's life and travel. For example, an advanced driver assistance system (Advanced Driver Assistance System, ADAS) plays a very important role in an intelligent vehicle. The advanced driver assistance system uses a detection apparatus mounted on the vehicle to detect an ambient environment, collect data, identify static or moving objects, and the like during a traveling process of the vehicle, and to perform system operations and analysis in combination with map data of a navigator, so that a driver can be aware of potential hazards in advance, thereby effectively improving driving comfort and safety of the vehicle.

The detection apparatuses may be considered as "eyes" of electronic devices for perceiving the environment, and include vision-based sensors such as cameras, and radar-based sensors such as millimeter-wave radars, lidars, and ultrasonic radars.

The following uses the lidar as an example to describe the detection apparatus in embodiments of this application.

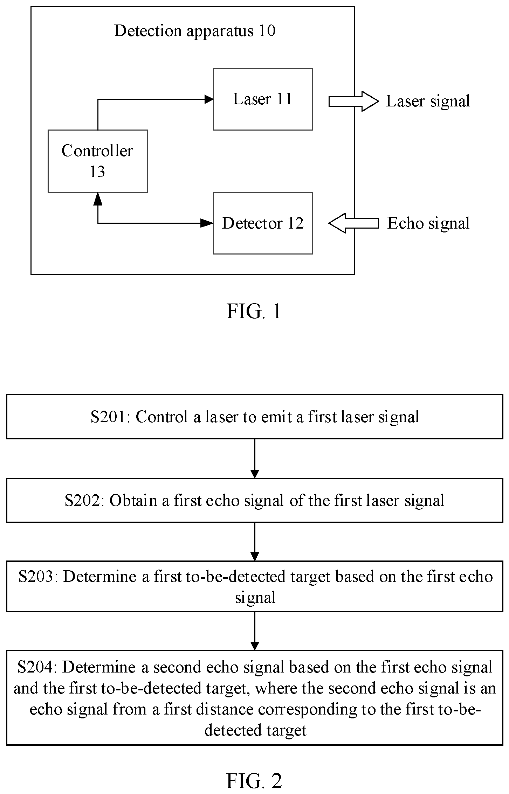

FIG. 1 is a diagram of a structure of the detection apparatus according to an embodiment of this application. As shown in FIG. 1, the detection apparatus 10 includes a laser 11 and a detector 12, and optionally further includes a controller 13. The controller 13 may be connected to the laser 11 and the detector 12 through a bus or in another possible connection manner. Specifically:
The laser 11 is configured to emit a laser signal. Optionally, the laser 11 may include one or more light-emitting elements. For example, the laser 11 may include a light-emitting element such as a laser diode (laser diode, LD), a vertical cavity surface emitting laser (vertical cavity surface emitting laser, VCSEL), a photonic crystal surface emitting semiconductor laser (photonic crystal surface emitting semiconductor laser, PCSEL), an edge emitting laser (edge emitting laser, EEL), a distributed feedback laser diode (distributed feedback LD, DFB-LD), a distributed Bragg reflection laser diode (distributed Bragg reflection LD, DBR-LD), a grating coupled sampling reflection laser diode (grating coupled sampling reflection LD, GCSR-LD), or a micro-opto-electro-mechanical system laser diode (micro-opto-electro-mechanical system LD, MOEMS-LD).

Optionally, when the laser 11 includes the plurality of light-emitting elements, the plurality of light-emitting elements may be arranged in an array, for example, in array formats such as 1×2, 2×3, or 3×3. In this case, the laser may be referred to as an array laser. This embodiment of this application does not impose any limitation on a quantity of rows and columns in array arrangement of the light-emitting elements.

Optionally, the laser signal emitted by the laser 11 may illuminate a detection area by using one or more optical elements. The optical element may include but is not limited to a collimator, a polarizer, a lens, a window, a light filter, a beam splitter, a light homogenizer, a reflector, a rotating mirror, an oscillating mirror, a micro-oscillating mirror, or the like. This embodiment of this application does not impose any limitation on a quantity or placement positions of the optical elements.

Optionally, the laser signal emitted by the laser 11 may illuminate an entire detection area at a time.

Optionally, the laser signal emitted by the laser 11 may illuminate the detection area by using a scanning element, to implement scanning-based detection on the detection area. For example, the laser signal emitted by the laser 11 may illuminate different sub-areas of the detection area by using scanning elements at different angles. The scanning element may include one or more of a rotating mirror, a micro-oscillating mirror, an oscillating mirror, or the like. A scanning pattern may include spot scanning, line scanning, or the like. A scanning sequence may be from top to bottom, from bottom to top, from left to right, from right to left, or the like. This is not limited in this embodiment of this application. In addition, scanning-based detection of the detection area can also be achieved by moving or rotating the laser 11 itself.

The detector 12 is configured to receive an optical signal. Further, the detector 12 may obtain an electrical signal based on the optical signal. Optionally, the detector 12 may include one or more detection elements. For example, the detector 12 may include a detection element such as a single-photon avalanche diode (single-photon avalanche diode, SPAD), a silicon photomultiplier (silicon photomultiplier, SiPM), a semiconductor-based avalanche photodiode (avalanche photo detector, APD), a multi-pixel photon counter (multi-pixel photon counter, MPPC), or an electron multiplying charge-coupled device (electron multiplying charge-coupled device, EMCCD).

Optionally, when the detector 12 includes the plurality of detection elements, the plurality of detection elements may be arranged in an array, for example, in array formats such as 1×2, 2×3, or 3×3. In this case, the detector may be referred to as an array detector. This embodiment of this application does not impose any limitation on a quantity of rows and columns in the array arrangement of the detection elements.

Optionally, when the detector 12 includes a plurality of detection elements, only some detection elements may be in a working state (that is, an on state or a detectable state) when the detector 12 works. In this case, the other detection elements are in a non-working state (that is, an off state or an undetectable state).

Optionally, in a process of receiving an optical signal by the detector 12, the optical signal may pass through one or more optical elements before reaching the detector 12. The optical element may include but is not limited to a collimator, a polarizer, a lens, a window, a light filter, a beam splitter, a light homogenizer, a reflector, a rotating mirror, an oscillating mirror, a micro-oscillating mirror, or the like. This embodiment of this application does not impose any limitation on a quantity or placement positions of the optical elements.

Optionally, the detector 12 may have different working modes, for example, a free mode, a digital gated mode, or a physical gated mode. Trigger conditions for entering the different modes may be configured as required. In a possible design, entering or switching between the different modes may be implemented by controlling a bias voltage. For example, a voltage control signal for the free mode is the same as that for the digital gated mode, while the physical gated mode has an independent voltage control signal.

The controller 13 is configured to control some or all components in the detection apparatus 10. For example, the controller 13 is configured to control the laser 11 and the detector 12 in the detection apparatus 10.

Optionally, the controller 13 includes a driver module and a receiving module. The driver module is configured to generate a control signal to control a corresponding component to implement a function of the corresponding component. For example, the driver module may send a control signal to the laser 11, to control the laser 11 to emit a laser signal. For another example, the driver module may send a control signal to the detector 12, to control the detector 12 to receive an optical signal and convert the optical signal into an electrical signal. The receiving module is configured to receive data output by the detector 12.

Optionally, the controller 13 further includes a timing module. The timing module is configured to record and control a delay of receiving an optical signal by the detector 12 relative to emitting a laser signal by the laser 11, thereby controlling a turn-on moment of the detector 12.

Optionally, the controller 13 may be further connected to an external controller (or an external processor). For example, the detection apparatus 10 is a vehicle-mounted radar. The controller 13 in the detection apparatus 10 may be connected to a multi-domain controller (multi domain controller, MDC) in a vehicle or another possible in-vehicle controller. The in-vehicle controller may send an instruction to the controller 13, and the controller 13 generates a control signal according to the instruction.

Optionally, the controller 13 further includes a processing module. The processing module is configured to process data output by the detector 12, to obtain detection data. For example, the processing module may include one or more of a signal detection module, a TDC, a filter, a TOF extraction module, and the like. For another example, the detection data may include one or more of a TOF, point cloud information, a statistical histogram, an image, or the like.

It should be understood that the foregoing modules may be implemented by using hardware (for example, a processor, a chip, or a circuit), software (for example, a computer program, computer instructions, or an executable file), or a combination of hardware and software. Optionally, when the foregoing modules are in a form of hardware, a plurality of pieces of hardware may be independent or integrated. When the foregoing modules are in a form of software, one or more hardware apparatuses execute software to implement functions.

It should be noted that the detection apparatus shown in FIG. 1 is merely an example, and is not intended to limit the detection apparatus in embodiments of this application. In another example, the detection apparatus may include fewer or more components. In addition, as an example of the detection apparatus, a specific product of the lidar may be implemented in a plurality of manners. For example, embodiments of this application may be applied to a scanning lidar, a flash (flash) lidar, a fused detection radar, or the like. For another example, embodiments of this application may be applied to a mechanical lidar, a solid-state lidar, a hybrid solid-state lidar, or the like.

The following describes the detection method provided in embodiments of this application.

FIG. 2 is a schematic flowchart of the detection method according to an embodiment of this application. Optionally, the detection method may be applied to the detection apparatus shown in FIG. 1. For example, an execution body of the detection method may be the controller 13 in FIG. 1, and a laser and a first detector described below may be respectively the laser 11 and the detector 12 in FIG. 1.

As shown in FIG. 2, the detection method includes at least the following step S201 to step S204.

S201: Control a laser to emit a first laser signal.

Specifically, the controller may send a first control signal to the laser, to control the laser to emit the first laser signal to a detection area. In response to the first control signal from the controller, the laser emits the first laser signal to the detection area.

S202: Obtain a first echo signal of the first laser signal.

Specifically, the controller may send a second control signal to the first detector, to control the first detector to receive an optical signal returned from the detection area. In response to the second control signal from the controller, the first detector receives the optical signal returned from the detection area, to obtain an echo signal (denoted as the first echo signal for differentiation) of the first laser signal. The first detector outputs the first echo signal to the controller, so that the controller obtains the first echo signal.

For example, a target object may exist in the detection area. After the first laser signal illuminates the detection area, the target object in the detection area reflects the first laser signal, to generate a reflected signal (or referred to as an echo signal) of the first laser signal. The first echo signal includes a reflected signal corresponding to the target object.

Optionally, when there are a plurality of target objects in the detection area, the plurality of target objects may separately perform reflection to generate a plurality of reflected signals of the first laser signal. The first echo signal includes a plurality of reflected signals corresponding to the plurality of target objects.

In a possible implementation, the controller may control the first detector to continuously receive an echo signal of the first laser signal from an emission moment of the first laser signal, to obtain the first echo signal. The first echo signal includes a plurality of echo signals corresponding to different times.

The emission moment of the first laser signal is a moment at which the laser emits the first laser signal. Specifically, the controller may control the first detector to be turned on from the emission moment of the first laser signal, and keep the first detector in an on state (that is, in an always-on state), so that the first detector may continuously receive the echo signal of the first laser signal from the emission moment of the first laser signal.

The first detector may receive a plurality of echo signals in the always-on state, and delays of receiving moments of the plurality of echo signals relative to the emission moment of the first laser signal are different. For brevity of description, a delay of a receiving moment of each echo signal relative to the emission moment of the first laser signal is denoted as a time corresponding to the echo signal, so that the first echo signal includes echo signals corresponding to a plurality of different times.

For example, when there are a plurality of target objects in the detection area, each target object may generate one echo signal by reflecting the first laser signal, so that the first detector may receive a plurality of echo signals generated by the plurality of target objects. Distances of different target objects relative to the detection apparatus may be different. Because a time corresponding to the echo signal generated by each target object is related to a distance of the target object relative to the detection apparatus, times corresponding to the plurality of echo signals generated by the plurality of target objects may be different.

In a possible implementation, when the laser emits the first laser signal, that is, at the emission moment of the first laser signal, the controller starts timing, and the controller may send a control signal to the first detector, to trigger the first detector to enter a digital gated mode. In the digital gated mode, the first detector is in the always-on state, thereby continuously receiving the echo signal of the first laser signal.

In the foregoing implementation, the first detector is controlled to continuously receive the echo signal of the first laser signal from the emission moment of the first laser signal, so that the first detector can receive a plurality of echo signals corresponding to different times, that is, echo signals from different distances. This helps the first detector receive all echo signals that may be returned from the detection area, thereby implementing comprehensive detection of the entire detection area.

S203: Determine a first to-be-detected target based on the first echo signal.

The first to-be-detected target may be understood as a target object that may exist in the detection area. There may be one or more first to-be-detected targets.

Optionally, when there are a plurality of target objects in the detection area, the first echo signal may include a plurality of echo signals generated by the plurality of target objects, and one or more corresponding first to-be-detected targets may be determined based on one or more echo signals in the plurality of echo signals.

In a possible implementation, when the first echo signal includes echo signals corresponding to a plurality of different times, a first time is determined based on the echo signals corresponding to the plurality of different times. An echo signal corresponding to the first time includes a characteristic signal. The first to-be-detected target is determined based on the first time, and a first distance corresponding to the first to-be-detected target is related to the first time.

A reflected signal returned from a target object in the detection area usually has a special waveform characteristic, and the special waveform characteristic of the reflected signal from the target object may be obtained through pre-definition, pre-configuration, or calculation. A signal (denoted as the characteristic signal) that meets the special waveform characteristic may be detected. In other words, the characteristic signal has a special waveform feature, and may correspond to the target object in the detection area, so that the characteristic signal may be used to determine the first to-be-detected target.

It should be noted that the characteristic signal may not correspond to a real target object. In other words, the characteristic signal may not completely match a real target object in the detection area, and a matching degree of the characteristic signal may be limited by a manufacturing process, a signal processing capability, an actual detection environment, and the like.

For example, the characteristic signal may include one or more of a peak signal, a broadened signal, a distorted signal, and the like. The peak signal is a signal corresponding to a highest value in signal values within a period of time; the broadened signal is a segment of signal whose signal value remains consistently high (for example, higher than a set threshold) within a period of time; and the distorted signal is a signal whose waveform is distorted (for example, an irregular shape or contour).

Optionally, the characteristic signal may reflect information such as a distance, coordinates, a position, a color, reflectivity, reflection intensity, or a speed of the target object. Alternatively, the information such as the distance, the coordinates, the position, the color, the reflectivity, the reflection intensity, or the speed of the target object may be obtained by processing the characteristic signal.

Optionally, a detection rule may be set based on the special waveform characteristic, and the characteristic signal is selected from the first echo signal according to the detection rule. When the first echo signal includes echo signals corresponding to a plurality of different times, an echo signal including the characteristic signal may be selected from the echo signals corresponding to the plurality of different times, a time corresponding to the echo signal including the characteristic signal is determined as the first time, and then the first to-be-detected target is determined based on the first time.

The first time may be understood as a time corresponding to an echo signal generated by the first to-be-detected target, that is, a delay of a receiving moment of the echo signal generated by the first to-be-detected target relative to an emission moment of the first laser signal. The first distance corresponding to the first to-be-detected target may be understood as a distance between the first to-be-detected target and the detection apparatus. The first distance is related to the first time. For example, the first distance may be obtained through calculation by using a speed of light and the first time.

In an example, the first time may be a single time, that is, there is one time corresponding to the first to-be-detected target. Correspondingly, the first distance may be a single distance, that is, there is one distance corresponding to the first to-be-detected target. For example, when the echo signal generated by the first to-be-detected target is the peak signal, the first to-be-detected target corresponds to one time, and correspondingly, the first to-be-detected target corresponds to one distance.

In another example, the first time may be a time range, and the time range includes a plurality of times, that is, there are a plurality of times corresponding to the first to-be-detected target. Correspondingly, the first distance may be a distance range, and the distance range includes a plurality of distances, that is, there are a plurality of distances corresponding to the first to-be-detected target. For example, when the echo signal generated by the first to-be-detected target is the broadened signal or the distorted signal, the first to-be-detected target corresponds to a plurality of times, and correspondingly, the first to-be-detected target corresponds to a plurality of distances. In this case, the first to-be-detected target may also be referred to as an extended target.

In the foregoing implementation, the echo signal including the characteristic signal may correspond to the target object in the detection area, so that the first to-be-detected target may be determined based on the echo signal including the characteristic signal. Specifically, the first distance corresponding to the first to-be-detected target may be determined based on the first time corresponding to the echo signal including the characteristic signal, to subsequently extract an echo signal from the first distance, thereby implementing fine detection at the first distance.

S204: Determine a second echo signal based on the first echo signal and the first to-be-detected target, where the second echo signal is an echo signal from the first distance corresponding to the first to-be-detected target.

After the first to-be-detected target is determined based on the first echo signal, the distance between the first to-be-detected target and the detection apparatus, that is, the first distance corresponding to the first to-be-detected target, may be obtained. The first echo signal includes echo signals from different distances, and the echo signal from the first distance may be extracted from the first echo signal, to obtain the second echo signal.

The first to-be-detected target represents a target object that may exist in the detection area, that is, a target object that may exist at the first distance away from the detection apparatus. Therefore, the second echo signal obtained by extracting the echo signal from the first distance from the first echo signal may be used to further confirm or identify the target object that may exist at the first distance.

In a possible implementation, when the first echo signal includes a plurality of echo signals corresponding to different times, an echo signal corresponding to the first time is extracted from the plurality of echo signals corresponding to the different times, to obtain the second echo signal.

Specifically, the detection area may be understood as including a plurality of sub-areas, and the first laser signal emitted by the laser to the detection area may illuminate each sub-area. For each sub-area, the first detector receives an echo signal (denoted as a sub-echo signal) from the sub-area, to obtain a first sub-echo signal, and each sub-area corresponds to one first sub-echo signal. The first echo signal includes a plurality of first sub-echo signals corresponding to a plurality of sub-areas, and each first sub-echo signal may include a plurality of sub-echo signals corresponding to different times.

In a possible design, the detector includes a plurality of detection elements, and each detection element corresponds to one sub-area in the detection area and is configured to receive a sub-echo signal from the sub-area, to obtain the first sub-echo signal.

In another possible design, the detector includes one detection element, and sequentially receives sub-echo signals from the sub-areas in a scanning detection manner, to obtain the first sub-echo signal.

For each first sub-echo signal, a second sub-echo signal may be obtained by extracting, from the first sub-echo signal, a sub-echo signal corresponding to the first time. The second echo signal includes a plurality of second sub-echo signals extracted from the plurality of first sub-echo signals, and each second sub-echo signal is a sub-echo signal from the first distance.

Optionally, statistics on each first sub-echo signal are collected by using a time-correlated single photon counting (time-correlated single photon counting, TCSPC) method, to obtain a statistical histogram corresponding to each first sub-echo signal. The statistical histogram is denoted as a first statistical histogram. In the first statistical histogram, a horizontal axis represents time, while a vertical axis represents an echo photon count used to represent the first sub-echo signal.

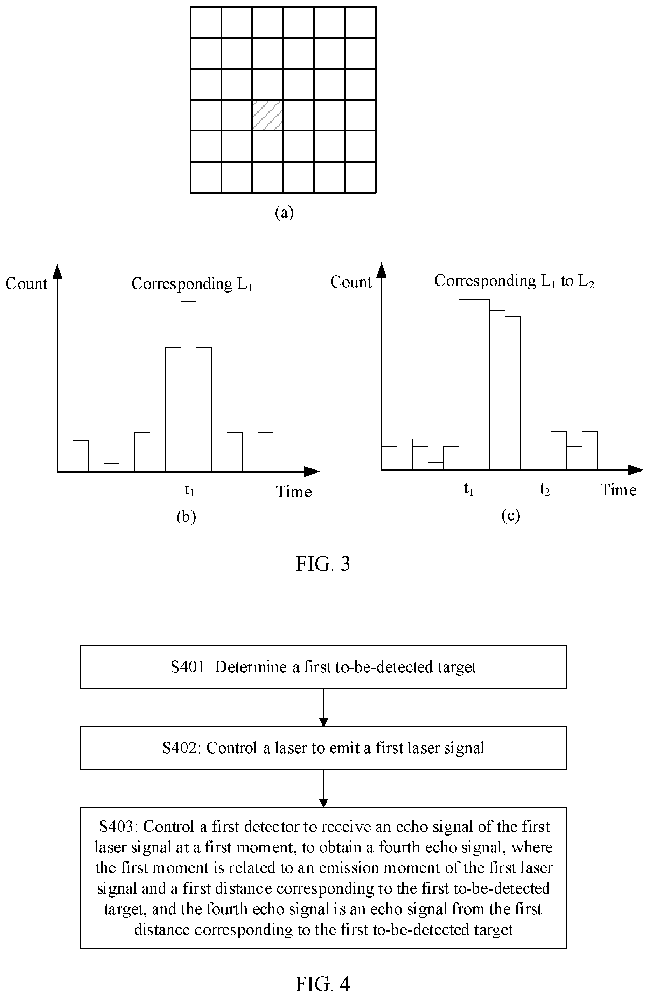

FIG. 3 is a statistical diagram of the first sub-echo signal according to an embodiment of this application. (a) of FIG. 3 represents the first detector, and the first detector is a detector of a 6×6 array and includes 6×6 detection elements. Each grid represents one detection element, and the detection element represented by each grid may detect a corresponding sub-area, to obtain one first sub-echo signal. A first statistical histogram may be obtained by performing statistical analysis using the TCSPC method on the first sub-echo signal detected by the detection element represented by each grid in (a) of FIG. 3.

A first sub-echo signal detected by a detection element (denoted as an example detection element) represented by a shadow box in (a) of FIG. 3 is used as an example. A first statistical histogram corresponding to the first sub-echo signal may be shown in (b) or (c) of FIG. 3. The first statistical histogram reflects distribution of echo photons received by the example detection element in different times, and different times correspond to different echo photon counts. For a detection element represented by a blank box in (a) of FIG. 3, that is, a detection element (denoted as another detection element) other than the example detection element, a first statistical histogram corresponding to a first sub-echo signal detected by the detection element is not shown.

In an example, as shown in (b) of FIG. 3, a time t₁ corresponds to a highest echo photon count, that is, the time t₁ corresponds to a peak signal. In this case, the first time is a single time t₁, and correspondingly, the first distance is a single distance L₁. The echo photon count corresponding to the first time t₁ in the first statistical histogram represents an echo signal obtained by the example detection element at the first distance L₁, that is, a second sub-echo signal.

The echo photon count corresponding to the first time t₁ is extracted from the first statistical histogram shown in (b) of FIG. 3, and a second sub-echo signal of the example detection element in (a) of FIG. 3 may be obtained. Similarly, the echo photon count corresponding to the first time t₁ is extracted from the first statistical histogram corresponding to the another detection element, to obtain a second sub-echo signal of the another detection element. With reference to second sub-echo signals of all detection elements, a second echo signal, that is, an echo signal from the first distance L₁, may be obtained, to implement fine detection at the first distance L₁.

In another example, as shown in (c) of FIG. 3, an echo photon count corresponding to a time range of t₁ to t₂ remains consistently high, that is, the time range of t₁ to t₂ corresponds to a broadened signal. In this case, the first time is the time range of t₁ to t₂, including six times. Correspondingly, the first distance is a distance range of L₁ to L₂, including six distances. The echo photon count corresponding to the first time from t₁ to t₂ in the first statistical histogram represents an echo signal, that is, a second sub-echo signal, obtained by the example detection element at the first distance from L₁ to L₂.

The echo photon count corresponding to the first time from t₁ to t₂ is extracted from the first statistical histogram shown in (c) of FIG. 3, and a second sub-echo signal of the example detection element in (a) of FIG. 3 may be obtained. Similarly, the echo photon count corresponding to the first time from t₁ to t₂ is extracted from the first statistical histogram corresponding to the another detection element, to obtain a second sub-echo signal of the another detection element. With reference to second sub-echo signals of all detection elements, a second echo signal, that is, an echo signal from the first distance from L₁ to L₂, may be obtained, to implement fine detection at the first distance from L₁ to L₂.

In the foregoing implementation, the echo signal corresponding to the first time represents an echo signal from the first distance. The echo signal corresponding to the first time is extracted from the echo signals corresponding to the plurality of different times, to obtain the echo signal from the first distance, thereby implementing fine detection at the first distance.

In a possible implementation, after the second echo signal is determined, a first image may be further generated based on the second echo signal. The first image is an image at the first distance, and the first image identifies the first to-be-detected target.

The first image may be understood as an image of a slice in the detection area at the first distance away from the detection apparatus. That the slice and the detection apparatus are separated by the first distance may be understood as that a distance between each position of the slice and the detection apparatus is the first distance. In this case, the slice may be a cambered surface. That the slice and the detection apparatus are separated by the first distance may alternatively be understood as that a distance between any given position of the slice and the detection apparatus is the first distance, while a distance between another position and the detection apparatus is related to the first distance. For example, the distance may be obtained through calculation based on the first distance and a field-of-view angle corresponding to the another position. In this case, the slice may be a planar surface.

Because the first distance is also the distance between the detection apparatus and the target object (that is, the first to-be-detected target) that may exist in the detection area, the slice at the first distance away from the detection apparatus may be considered to include the first to-be-detected target, and the image (that is, the first image) of the slice may be considered to include related information of the first to-be-detected target, so that the first image may be used to further confirm or identify the first to-be-detected target. For example, the first image may reflect a contour of the first to-be-detected target, and what the first to-be-detected target specifically is, for example, a vehicle, a person, or a tree, may be identified based on the contour.

In an example, the first distance is a single distance, and the second echo signal is an echo signal from the single distance. Correspondingly, one image may be generated based on the echo signal from the single distance, so that the first image may be a single image, for identifying the first to-be-detected target.

In another example, the first distance includes a plurality of distances, and the second echo signal includes echo signals from the plurality of distances. Correspondingly, one image may be generated based on an echo signal from each of the plurality of distances, so that the first image may include a plurality of images, for identifying the first to-be-detected target. Optionally, any quantity of images in the plurality of images may be superimposed to obtain a superimposed image, for identifying the first to-be-detected target.

In a possible implementation, generating the first image based on the second echo signal may be specifically converting the second echo signal into image-related data, thereby obtaining the first image. Optionally, the image-related data is a grayscale value, and the first image is a grayscale image.

Optionally, when the first detector includes a plurality of detection elements, the second echo signal includes a plurality of second sub-echo signals, and each second sub-echo signal corresponds to one detection element. For example, the first detector is a detector of a 6×6 array shown in (a) of FIG. 3. The second echo signal includes 6×6 second sub-echo signals. The first image generated based on the second echo signal includes 6×6 pixels. Each pixel corresponds to one detection element, and a grayscale value of each pixel may be determined based on a second sub-echo signal of the detection element corresponding to the pixel.

For example, the example detection element in (a) of FIG. 3 is used as an example. The second sub-echo signal of the example detection element may be specifically the echo photon count corresponding to the first time t₁ in (b) of FIG. 3. The echo photon count is converted into a grayscale value, used as a grayscale value of a pixel corresponding to the example detection element. Similarly, the echo photon count corresponding to the first time t₁ in the first statistical histogram corresponding to the another detection element may be converted into a grayscale value, used as a grayscale value of a pixel corresponding to the another detection element.

In the foregoing implementation, the second echo signal is an echo signal from the first distance away from the detection apparatus, and the first image generated based on the second echo signal is the image of the slice at the first distance away from the detection apparatus. Because the first distance is also a distance between the detection apparatus and the target object (that is, the first to-be-detected target) that may exist in the detection area, the first image includes related information of the first to-be-detected target. The first image can be used to further confirm or identify the first to-be-detected target, thereby improving accuracy of a detection result and improving detection performance.

In a possible implementation, a third echo signal is determined based on the first echo signal and the first to-be-detected target. The third echo signal is an echo signal from a second distance, and a distance difference between the second distance and the first distance is less than a first distance difference.

When a target object (that is, the first to-be-detected target) may exist at the first distance away from the detection apparatus, considering that interference and an error may exist during a detection process, it may be considered that a target object (denoted as a second to-be-detected target) may also exist at nearly the first distance, and the second to-be-detected target may be the same as or may be different from the first to-be-detected target. Therefore, an echo signal from nearly the first distance may be used to perform auxiliary detection on a target object that may exist.

The second distance may be understood as a distance that is close to the first distance, and there may be one or more second distances. The second distance may be greater than the first distance, or the second distance may be less than the first distance. Specifically, the distance difference between the second distance and the first distance is less than the first distance difference. A specific value of the first distance difference may be preconfigured or predefined. This is not limited in this embodiment of this application.

Optionally, after the first distance is obtained, one or more second distances may be determined based on the first distance and the first distance difference. The first echo signal includes echo signals from different distances, and an echo signal from the second distance may be extracted from the first echo signal, to obtain the third echo signal. The echo signal from the second distance may be understood as an echo signal from nearly the first distance.

In a possible implementation, a second time may be calculated based on the second distance. The second time may be understood as a time corresponding to an echo signal generated by the second to-be-detected target, that is, a delay of a receiving moment of the echo signal generated by the second to-be-detected target relative to an emission moment of the first laser signal. The second time is related to the second distance. For example, the second time may be obtained through calculation by using a speed of light and the second distance. When the first echo signal includes a plurality of echo signals corresponding to different times, echo signals corresponding to the second time may be extracted from the plurality of echo signals corresponding to the different times, to obtain the third echo signal.

It should be understood that, for specific descriptions of extracting the echo signal corresponding to the second time from the plurality of echo signals corresponding to the different times, refer to related descriptions of extracting the echo signal corresponding to the first time from the plurality of echo signals corresponding to the different times in the foregoing embodiment. Details are not described herein again.

In the foregoing implementation, the distance difference between the second distance and the first distance is less than the first distance difference, indicating that the second distance is close to the first distance. An echo signal (that is, the third echo signal) from the second distance represents an echo signal from nearly the first distance, and may be used to perform fine detection on a target object that may exist at nearly the first distance. This helps reduce missing detection or false detection caused by interference or an error during a detection process, thereby improving detection performance.

In a possible implementation, after the third echo signal is determined, a third image may be further generated based on the third echo signal. The third image is an image at the second distance, and the third image identifies the second to-be-detected target.

The third image may be understood as an image of a slice in the detection area at the second distance away from the detection apparatus. That the slice and the detection apparatus are separated by the second distance may be understood as that a distance between each position of the slice and the detection apparatus is the second distance. In this case, the slice may be a cambered surface. Alternatively, that the slice and the detection apparatus are separated by the second distance may be understood as that a distance between any given position of the slice and the detection apparatus is the second distance, while a distance between another position and the detection apparatus is related to the second distance. For example, the second distance may be obtained through calculation based on the second distance and a field-of-view angle corresponding to the another position. In this case, the slice may be a planar surface.

Because the second distance is also the distance between the detection apparatus and the target object (that is, the second to-be-detected target) that may exist in the detection area, the slice at the second distance away from the detection apparatus may be considered to include the second to-be-detected target, and the image (that is, the third image) of the slice may be considered to include related information of the second to-be-detected target, so that the third image may be used to further confirm or identify the second to-be-detected target. For example, the third image may reflect a contour of the second to-be-detected target, and what the second to-be-detected target specifically is, for example, a vehicle, a person, or a tree, may be identified based on the contour.

It should be understood that, for specific descriptions of generating the third image based on the third echo signal, refer to related descriptions of generating the first image based on the second echo signal in the foregoing embodiment. Details are not described herein again.

In the foregoing implementation, the third echo signal is an echo signal from the second distance away from the detection apparatus, and the third image generated based on the third echo signal is the image of the slice at the second distance away from the detection apparatus. Because the second distance is also a distance between the detection apparatus and the target object (that is, the second to-be-detected target) that may exist in the detection area, the third image includes related information of the second to-be-detected target. The third image can be used to further confirm or identify the second to-be-detected target, thereby improving accuracy of a detection result and improving detection performance.

In the foregoing embodiment, the controller may control the laser to emit the first laser signal to the detection area, and obtain the first echo signal that is returned from the detection area and that is received by the detector. The first echo signal is used for comprehensive detection of an entire detection area, so that the target object that may exist in the detection area can be determined as the first to-be-detected target. Then, the second echo signal from the first distance corresponding to the first to-be-detected target is extracted from the first echo signal. The second echo signal may be used for fine detection of the target object that may exist at the first distance, thereby improving detection performance. Accordingly, detection at a specific distance can be implemented by using the detection apparatus alone without adding an additional auxiliary apparatus such as a gated imaging device, thereby reducing hardware costs and complexity for implementing the detection at the specific distance.

FIG. 4 is a schematic flowchart of another detection method according to an embodiment of this application. Optionally, the detection method may be applied to the detection apparatus shown in FIG. 1. For example, an execution body of the detection method may be the controller 13 in FIG. 1.

As shown in FIG. 4, the detection method includes at least the following step S401 to step S403.

S401: Determine a first to-be-detected target.

The first to-be-detected target may be understood as a target object that may exist in a detection area. There may be one or more first to-be-detected targets.

In a possible implementation, the controller may obtain related information in the detection area, and identify, based on the related information, whether there is a target object in the detection area. When identifying that there is a target object in the detection area, the controller may determine the first to-be-detected target.

Specifically, the controller may obtain the related information in the detection area from a sensing device. The sensing device is connected to the controller, and is configured to collect (or sense) related information in the detection area, and transmit the collected related information in the detection area to the controller. For example, the sensing device may include but is not limited to one or more of a visual sensor, a millimeter-wave radar, a lidar, and a position sensor, and the related information in the detection area may be one-dimensional or multi-dimensional sensing information.

For example, the sensing device is the visual sensor (for example, a camera). The visual sensor may collect an image in the detection area, and transmit the collected image to the controller. After obtaining the image, the controller may identify, based on the image, whether there is a target object in the detection area. For another example, the sensing device is the millimeter-wave radar. The millimeter-wave radar may transmit an electromagnetic wave signal to the detection area, receive an electromagnetic wave signal returned from the detection area, and transmit the received electromagnetic wave signal to the controller. After obtaining the electromagnetic wave signal, the controller may identify, based on the electromagnetic wave signal, whether there is a target object in the detection area.

In the foregoing implementation, the sensing device collects the related information of the detection area, and transmits the related information of the detection area to the controller. The controller identifies, based on the related information, whether there is a target object in the detection area, to obtain a preliminary detection result.

Alternatively, the sensing device collects the related information of the detection area, and identifies, based on the related information, whether there is a target object in the detection area. That is, the sensing device determines a preliminary detection result and transmits the preliminary detection result to the controller, so that the controller may directly obtain the preliminary detection result without performing an identification operation.

After determining the first to-be-detected target, the controller may further obtain prior distance information of the first to-be-detected target. The prior distance information may be a distance (denoted as a first distance corresponding to the first to-be-detected target) between the first to-be-detected target and the detection apparatus, that is, a target object may exist at the first distance. The first distance may be a single distance. Alternatively, the first distance may be a distance range, and the distance range includes a plurality of distances.

S402: Control a laser to emit a first laser signal.

Specifically, the controller may send a first control signal to the laser, to control the laser to emit the first laser signal to the detection area. In response to the first control signal from the controller, the laser emits the first laser signal to the detection area.

S403: Control a first detector to receive an echo signal of the first laser signal at a first moment, to obtain a fourth echo signal, where the first moment is related to an emission moment of the first laser signal and a first distance corresponding to the first to-be-detected target, and the fourth echo signal is an echo signal from the first distance corresponding to the first to-be-detected target.

The emission moment of the first laser signal is a moment at which the laser emits the first laser signal. The first moment may be understood as a turn-on moment of the first detector. At this time, the first detector may receive the echo signal of the first laser signal, to obtain the echo signal (denoted as the fourth echo signal for differentiation) from the first distance corresponding to the first to-be-detected target. The first distance corresponding to the first to-be-detected target is the distance between the first to-be-detected target and the detection apparatus. The fourth echo signal is an echo signal from the first distance, and may be used to further confirm or identify a target object that may exist at the first distance.

Specifically, the controller may send a third control signal to the first detector, to control the first detector to receive, at the first moment, an optical signal returned from the first distance. In response to the third control signal from the controller, the first detector receives the optical signal returned from the first distance, to obtain the fourth echo signal. The first detector outputs the fourth echo signal to the controller, so that the controller obtains the fourth echo signal.

In the foregoing embodiment, the controller may first determine a target object that may exist in the detection area as the first to-be-detected target, and then control the laser to emit the first laser signal to the detection area, and control the first detector to receive the echo signal of the first laser signal at the first moment. Because the first moment is related to the emission moment of the first laser signal and the first distance corresponding to the first to-be-detected target, the first detector receives the echo signal from the first distance at the first moment. The echo signal from the first distance may be used to perform fine detection on the target object that may exist at the first distance, thereby improving detection performance. Accordingly, detection at a specific distance can be implemented by using the detection apparatus alone without adding an additional auxiliary apparatus such as a gated imaging device, thereby reducing hardware costs and complexity for implementing the detection at the specific distance.

In a possible implementation, the first moment and the emission moment of the first laser signal are separated by a first time, and the first time is a time of flight of a laser signal corresponding to the first distance.

The first moment is related to the emission moment of the first laser signal and the first distance corresponding to the first to-be-detected target. The controller may obtain the first moment through calculation based on the emission moment of the first laser signal and the first distance corresponding to the first to-be-detected target.

Specifically, after obtaining the first distance corresponding to the first to-be-detected target, the controller may convert the first distance into a time of flight (that is, the first time) of a corresponding laser signal. For example, the first time may be obtained through calculation by using the first distance and a speed of light. The first time may also be understood as a delay of a receiving moment (that is, the first moment) of the echo signal from the first distance relative to the emission moment of the first laser signal. That is, the first moment is later than the emission moment of the first laser signal by the first time.

In a possible implementation, when the laser emits the first laser signal, that is, at the emission moment of the first laser signal, the controller starts timing, and the controller may send the third control signal to the first detector, to trigger the first detector to enter a physical gated mode. In the physical gated mode, the first detector is first in an off state, and when a timing duration reaches the first time, the first detector is turned on, so that the first detector can receive the echo signal from the first distance. Optionally, a turn-on duration (or referred to as a detection gate width) of the first detector is a time unit, and the first detector returns to an off state after detection is completed.

In the foregoing implementation, the first moment and the emission moment of the first laser signal are separated by a first time, indicating that the first moment is later than the emission moment of the first laser signal by the first time. Because the first time is the time of flight of the laser signal corresponding to the first distance, the first moment is the turn-on moment of the first detector, that is, the first detector is turned on when the echo signal from the first distance arrives at the first detector. In this way, only the echo signal from the first distance may be received, and is used to perform fine detection on the target object that may exist at the first distance. Accordingly, echo signals that need to be received and processed can be reduced, thereby reducing impact of an unrelated signal on a detection result at the first distance.

Optionally, the first distance is a single distance, and the single distance may be converted into one time of flight of a corresponding laser signal (that is, a delay of the turn-on moment of the first detector relative to the emission moment of the first laser signal). Correspondingly, the first time is a single time, and the first moment is a single moment, so that the first detector receives the echo signal of the first laser signal at the single moment, to obtain the fourth echo signal.

Optionally, the first distance is a distance range, and a plurality of distances may be selected from the distance range. Each distance in the plurality of distances may be converted into one time of flight of a corresponding laser signal (that is, a delay of the turn-on moment of the first detector relative to the emission moment of the first laser signal), to obtain a plurality of times corresponding to the plurality of distances. Correspondingly, the first time includes a plurality of times, and the first moment includes a plurality of moments, so that the first detector receives echo signals of the first laser signal at the plurality of moments, to obtain the fourth echo signal.

Specifically, the detection area may be understood as including a plurality of sub-areas, and the first laser signal emitted by the laser to the detection area may illuminate each sub-area. For each sub-area, the first detector receives an echo signal (denoted as a fourth sub-echo signal for differentiation) from the first distance in the sub-area, and each sub-area corresponds to one fourth sub-echo signal. The fourth echo signal includes a plurality of fourth sub-echo signals corresponding to the plurality of sub-areas.

In a possible design, the detector includes a plurality of detection elements, and each detection element corresponds to one sub-area in the detection area and is configured to receive an echo signal from the first distance in the sub-area, to obtain the fourth sub-echo signal.

In another possible design, the detector includes one detection element, and sequentially receives an echo signal from the first distance in each sub-area in a scanning detection manner, to obtain the fourth sub-echo signal.

Optionally, statistics on each fourth sub-echo signal are collected by using a time-correlated single photon counting (time-correlated single photon counting, TCSPC) method, to obtain a statistical histogram corresponding to each fourth sub-echo signal. The statistical histogram is denoted as a second statistical histogram. In the second statistical histogram, a horizontal axis represents time, while a vertical axis represents an echo photon count used to represent the fourth sub-echo signal.

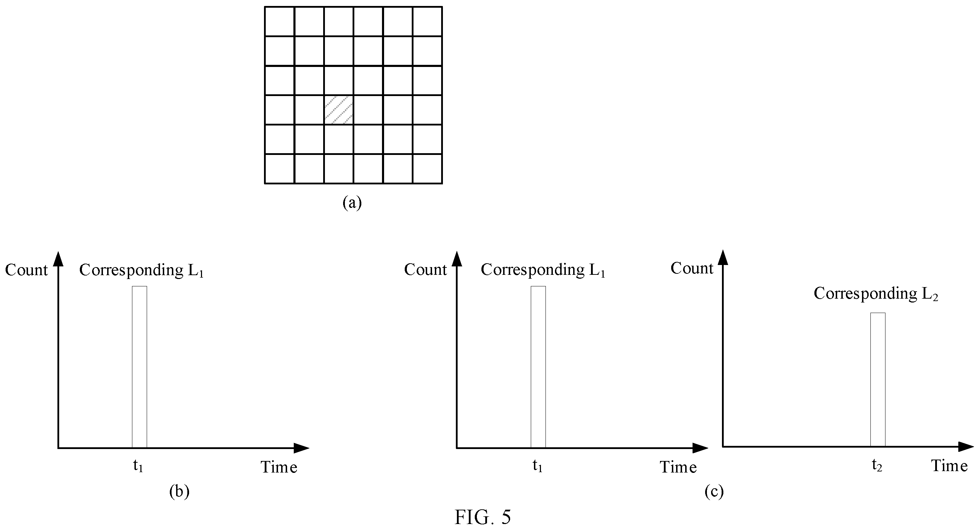

FIG. 5 is a statistical diagram of the fourth sub-echo signal according to an embodiment of this application. (a) of FIG. 5 represents the first detector, and the first detector is a detector of a 6×6 array and includes 6×6 detection elements. Each grid represents one detection element, and the detection element represented by each grid may detect a first distance in a corresponding sub-area, to obtain one fourth sub-echo signal. A second statistical histogram may be obtained by performing statistical analysis using the TCSPC method on the fourth sub-echo signal detected by the detection element represented by each grid in (a) of FIG. 5.

A fourth sub-echo signal detected at the first distance by a detection element (denoted as an example detection element) represented by a shadow box in (a) of FIG. 5 is used as an example. A second statistical histogram corresponding to the fourth sub-echo signal may be shown in (b) or (c) of FIG. 5. For a detection element represented by a blank box in (a) of FIG. 5, that is, a detection element (denoted as another detection element) other than the example detection element, a second statistical histogram corresponding to a fourth sub-echo signal detected by the detection element at the first distance is not shown.

In an example, as shown in (b) of FIG. 5, the first distance is a single distance (represented by L₁), and correspondingly, the first time is a single time (represented by t₁). The example detection element corresponds to a single second statistical histogram. The second statistical histogram shows an echo photon count corresponding to the first time t₁, which represents an echo signal detected by the example detection element at the first distance L₁. Similarly, an echo signal detected by the another detection element at the first distance L₁ may be obtained based on the second statistical histogram corresponding to the another detection element. With reference to echo signals detected by all detection elements at the first distance L₁, fine detection at the first distance L₁ is implemented.

In another example, as shown in (c) of FIG. 5, the first distance is a distance range (represented by L₁ to L₂), and correspondingly, the first time is a time range (represented by t₁ to t₂). Two distances (L₁ and L₂) are selected for detection. Correspondingly, the first time includes two times (t₁ and t₂). The example detection element corresponds to two second statistical histograms. One second statistical histogram shows an echo photon count corresponding to the time t₁, which represents an echo signal detected by the example detection element at the distance L₁. The other second statistical histogram shows an echo photon count corresponding to the time t₂, which represents an echo signal detected by the example detection element at the distance L₂. Similarly, echo signals detected by the another detection element at distances L₁ and L₂ may be obtained based on second statistical histograms corresponding to the another detection element. With reference to echo signals detected by all detection elements at the distances L₁ and L₂, fine detection at the first distances L₁ to L₂ is implemented.

In a possible implementation, after the fourth echo signal is determined, a second image may be further generated based on the fourth echo signal. The second image is an image at the first distance, and the second image identifies the first to-be-detected target.

The second image may be understood as an image of a slice in the detection area at the first distance away from the detection apparatus. That the slice and the detection apparatus are separated by the first distance may be understood as that a distance between each position of the slice and the detection apparatus is the first distance. In this case, the slice may be a cambered surface. That the slice and the detection apparatus are separated by the first distance may alternatively be understood as that a distance between any given position of the slice and the detection apparatus is the first distance, while a distance between another position and the detection apparatus is related to the first distance. For example, the distance may be obtained through calculation based on the first distance and a field-of-view angle corresponding to the another position. In this case, the slice may be a planar surface.

Because the first distance is also the distance between the detection apparatus and the target object (that is, the first to-be-detected target) that may exist in the detection area, the slice at the first distance away from the detection apparatus may be considered to include the first to-be-detected target, and the image (that is, the second image) of the slice may be considered to include related information of the first to-be-detected target, so that the second image may be used to further confirm or identify the first to-be-detected target. For example, the second image may reflect a contour of the first to-be-detected target, and what the first to-be-detected target specifically is, for example, a vehicle, a person, or a tree, may be identified based on the contour.

In an example, the first distance is a single distance, and the fourth echo signal is an echo signal from the single distance. Correspondingly, one image may be generated based on the echo signal from the single distance, so that the second image may be a single image, for identifying the first to-be-detected target.

In another example, the first distance includes a plurality of distances, and the fourth echo signal includes echo signals from the plurality of distances. Correspondingly, one image may be generated based on an echo signal from each of the plurality of distances, so that the second image may include a plurality of images, for identifying the first to-be-detected target. Optionally, any quantity of images in the plurality of images may be superimposed to obtain a superimposed image, for identifying the first to-be-detected target.

In a possible implementation, generating the second image based on the fourth echo signal may be specifically converting the fourth echo signal into image-related data, thereby obtaining the second image. Optionally, the image-related data is a grayscale value, and the second image is a grayscale image.

Optionally, when the first detector includes a plurality of detection elements, the fourth echo signal includes a plurality of fourth sub-echo signals, and each fourth sub-echo signal corresponds to one detection element. For example, the first detector is a detector of a 6×6 array shown in (a) of FIG. 5. The fourth echo signal includes 6×6 fourth sub-echo signals. The second image generated based on the fourth echo signal includes 6×6 pixels. Each pixel corresponds to one detection element, and a grayscale value of each pixel may be determined based on a fourth sub-echo signal of the detection element corresponding to the pixel.

For example, the example detection element in (a) of FIG. 5 is used as an example. The fourth sub-echo signal of the example detection element may be specifically the echo photon count corresponding to the first time t₁ in (b) of FIG. 5. The echo photon count is converted into a grayscale value, used as a grayscale value of a pixel corresponding to the example detection element. Similarly, the echo photon count corresponding to the first time t₁ in the second statistical histogram corresponding to the another detection element may be converted into a grayscale value, used as a grayscale value of a pixel corresponding to the another detection element.

In the foregoing implementation, the fourth echo signal is an echo signal from the first distance away from the detection apparatus, and the second image generated based on the fourth echo signal is the image of the slice at the first distance away from the detection apparatus. Because the first distance is also a distance between the detection apparatus and the target object (that is, the first to-be-detected target) that may exist in the detection area, the second image includes related information of the first to-be-detected target. The second image can be used to further confirm or identify the first to-be-detected target, thereby improving accuracy of a detection result and improving detection performance.

In a possible implementation, the first detector is controlled to receive the echo signal of the first laser signal at a second moment, to obtain an eighth echo signal. The second moment is related to the emission moment of the first laser signal and a second distance, a distance difference between the second distance and the first distance is less than a first distance difference, and the eighth echo signal is an echo signal from the second distance.

When a target object (that is, the first to-be-detected target) may exist at the first distance away from the detection apparatus, considering that interference and an error may exist during a detection process, it may be considered that a target object (denoted as a second to-be-detected target) may also exist at nearly the first distance, and the second to-be-detected target may be the same as or may be different from the first to-be-detected target. Therefore, an echo signal from nearly the first distance may be used to perform auxiliary detection on a target object that may exist.

The second distance may be understood as a distance that is close to the first distance, and there may be one or more second distances. The second distance may be greater than the first distance, or the second distance may be less than the first distance. Specifically, the distance difference between the second distance and the first distance is less than the first distance difference. A specific value of the first distance difference may be preconfigured or predefined. This is not limited in this embodiment of this application.

Optionally, after the first distance is obtained, one or more second distances may be determined based on the first distance and the first distance difference.

The second moment may be understood as a turn-on moment of the first detector. At this time, the first detector may receive the echo signal of the first laser signal, to obtain the echo signal (denoted as the eighth echo signal for differentiation) from the second distance. The echo signal from the second distance may be understood as an echo signal from nearly the first distance.

Specifically, the controller may send a fourth control signal to the first detector, to control the first detector to receive, at the second moment, an optical signal returned from the second distance. In response to the fourth control signal from the controller, the first detector receives the optical signal returned from the second distance, to obtain the eighth echo signal. The first detector outputs the eighth echo signal to the controller, so that the controller obtains the eighth echo signal.

In a possible implementation, the second moment and the emission moment of the first laser signal are separated by a second time. The second time is a time of flight of a laser signal corresponding to the second distance.

The second moment is related to the emission moment of the first laser signal and the second distance. The controller may obtain the second moment through calculation based on the emission moment of the first laser signal and the second distance.

Specifically, after obtaining the second distance, the controller may convert the second distance into a time of flight (that is, the second time) of a corresponding laser signal. For example, the second time may be obtained through calculation by using the second distance and a speed of light. The second time may also be understood as a delay of a receiving moment (that is, the second moment) of the echo signal from the second distance relative to the emission moment of the first laser signal. That is, the second moment is later than the emission moment of the first laser signal by the second time.

In a possible implementation, when the laser emits the first laser signal, that is, at the emission moment of the first laser signal, the controller starts timing, and the controller may send a fourth control signal to the first detector, to trigger the first detector to enter a physical gated mode. In the physical gated mode, the first detector is first in an off state. When a timing duration reaches the second time, the first detector is turned on, so that the first detector can receive an echo signal from the second distance. Optionally, a turn-on duration (or referred to as a detection gate width) of the first detector is a time unit, and the first detector returns to an off state after detection is completed.

In the foregoing implementation, the distance difference between the second distance and the first distance is less than the first distance difference, indicating that the second distance is close to the first distance. The first detector is controlled to receive the echo signal of the first laser signal at the second moment. Because the second moment is related to the emission moment of the first laser signal and the second distance, the first detector receives the echo signal from the second distance at the second moment. The echo signal from the second distance represents an echo signal from nearly the first distance, which may be used to perform fine detection on the target object that may exist at nearly the first distance. This helps reduce missing detection or false detection caused by interference or an error during a detection process, thereby improving detection performance.

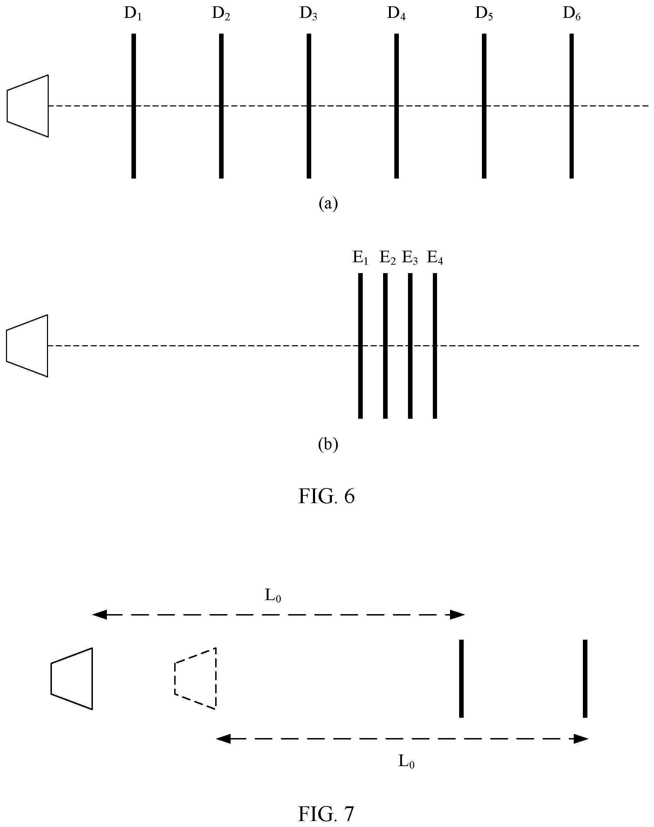

FIG. 6 is a diagram of detection distances according to an embodiment of this application. (a) of FIG. 6 represents first distances. As shown in (a) of FIG. 6, there may be a plurality of first distances, for example, D₁, D₂, D₃, D₄, ..., and Dₙ. (b) of FIG. 6 represents second distances. As shown in (b) of FIG. 6, the second distances are near the first distance D₄ in (a) of FIG. 6, and there may be a plurality of second distances, for example, E₁, E₂, E₃, and E₄.

Accordingly, in a distance dimension, large-scale slicing may be first performed to obtain a plurality of first distances. Then, for a first distance of interest, small-scale dense slicing is performed in its vicinity to obtain a plurality of second distances. In this way, a detection granularity can be reduced from coarse to fine, which helps improve detection efficiency and accuracy of a detection result.

In a possible implementation, after the eighth echo signal is determined, a fourth image may be further generated based on the eighth echo signal. The fourth image is an image at the second distance, and the fourth image identifies the second to-be-detected target.

The fourth image may be understood as an image of a slice in the detection area at the second distance away from the detection apparatus. That the slice and the detection apparatus are separated by the second distance may be understood as that a distance between each position of the slice and the detection apparatus is the second distance. In this case, the slice may be a cambered surface. That the slice and the detection apparatus are separated by the second distance may alternatively be understood as that a distance between any given position of the slice and the detection apparatus is the second distance, while a distance between another position and the detection apparatus is related to the second distance. For example, the second distance may be obtained through calculation based on the second distance and a field-of-view angle corresponding to the another position. In this case, the slice may be a planar surface.

Because the second distance is also the distance between the detection apparatus and the target object (that is, the second to-be-detected target) that may exist in the detection area, the slice at the second distance away from the detection apparatus may be considered to include the second to-be-detected target, and the image (that is, the fourth image) of the slice may be considered to include related information of the second to-be-detected target, so that the fourth image may be used to further confirm or identify the second to-be-detected target. For example, the fourth image may reflect a contour of the second to-be-detected target, and what the second to-be-detected target specifically is, for example, a vehicle, a person, or a tree, may be identified based on the contour.

It should be understood that, for specific descriptions of generating the fourth image based on the eighth echo signal, refer to related descriptions of generating the second image based on the fourth echo signal in the foregoing embodiment. Details are not described herein again.

In the foregoing implementation, the eighth echo signal is an echo signal from the second distance away from the detection apparatus, and the fourth image generated based on the eighth echo signal is the image of the slice at the second distance away from the detection apparatus. Because the second distance is also a distance between the detection apparatus and the target object (that is, the second to-be-detected target) that may exist in the detection area, the fourth image includes related information of the second to-be-detected target. The fourth image can be used to further confirm or identify the second to-be-detected target, thereby improving accuracy of a detection result and improving detection performance.

In some possible scenarios, the detection apparatus is in a moving state. In this case, both the laser and the first detector in the detection apparatus are in a moving state. For example, the detection apparatus is a vehicle-mounted lidar, and is in a moving state as the vehicle runs. When the first detector is in a moving state, the following two detection manners may be used for detection.

A first detection manner is performing detection at a fixed detection distance. The detection distance is a distance between a target position and the detection apparatus, and the target position is a to-be-detected position. To be specific, the distance between the target position and the detection apparatus remains unchanged. In this case, the target position is moving, and keeps a same distance away from the detection apparatus.

In the first detection manner, after obtaining the first distance corresponding to the first to-be-detected target, the controller may use the first distance as the detection distance, and control a turn-on moment of the first detector each time and an emission moment of the laser signal to be separated by a first time. The first time is related to the first distance. For example, the first time may be obtained through calculation based on the first distance and a speed of light.

FIG. 7 is a diagram of detection at a fixed detection distance according to an embodiment of this application. As shown in FIG. 7, a distance (that is, the detection distance) between the target position and the detection apparatus is represented by L₀. When the detection apparatus moves from left to right, the target position also moves from left to right correspondingly, to maintain a constant detection distance of L₀. In this example, the first time remains unchanged, and the first time (represented by T) may be calculated in the following manner: T=2L₀/c, where c represents a speed of light.

The foregoing detection manner based on a fixed detection distance may be applied to detecting a moving target. For example, when the detection apparatus is a vehicle-mounted lidar that is in a moving state as a vehicle runs, a moving target (for example, a running vehicle) in front of the detection apparatus may be detected.

A second detection manner is performing detection at a fixed target position. The target position is a to-be-detected position. To be specific, the target position remains unchanged. In this case, the target position remains constant.

In the second detection manner, after obtaining the first distance corresponding to the first to-be-detected target, the controller uses the first distance as the target position, uses the first distance as a current detection distance (that is, a current distance between the target position and the detection apparatus), and controls a current turn-on moment of the first detector and an emission moment of the laser signal to be separated by a first time (that is, a current first time). The current first time is related to the current detection distance, for example, the current first time (represented by T_{d}) may be calculated in the following manner: T_{d}=2L_{d}/c, where L_{d} represents a current detection distance, and c represents a speed of light.

It should be understood that, in the second detection manner, as the detection apparatus moves, the current detection distance changes, and correspondingly, the current first time also changes. A change of the current detection distance is related to a moving direction and a moving speed of the detection apparatus. For example, when the detection apparatus moves close to the target position, the current detection distance is reduced relative to the first distance, and a difference between the current detection distance and the first distance is equal to a moving distance of the detection apparatus. For another example, when the detection apparatus moves away from the target position, the current detection distance is increased relative to the first distance, and a difference between the current detection distance and the first distance is equal to a moving distance of the detection apparatus. The moving distance of the detection apparatus may be obtained through calculation by using a moving speed and a moving time of the detection apparatus.

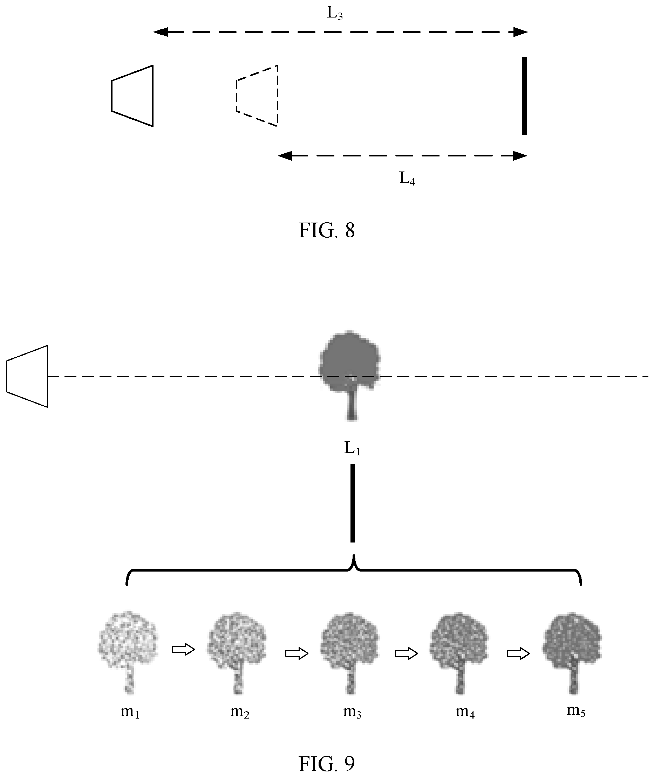

FIG. 8 is a diagram of detection at a fixed target position according to an embodiment of this application. As shown in FIG. 8, the target position remains unchanged, a distance (that is, the detection distance) between the target position and the detection apparatus changes with movement of the detection apparatus. The detection apparatus moves from left to right. After a time Δt, the detection distance changes from L₃ to L₄, and L₃-L₄=v*Δt, where v represents a moving speed of the detection apparatus, and Δt represents a moving time of the detection apparatus. In this example, when a current detection distance is L₃, a corresponding current first time (represented by T₃) may be calculated in the following manner: T₃=2L₃/c. When a current detection distance is L₄, a corresponding current first time (represented by T₄) may be calculated in the following manner: T₄=2L₄/c, where c represents a speed of light.

The foregoing detection manner based on a fixed target position may be applied to detecting a static target. For example, when the detection apparatus is a vehicle-mounted lidar that is in a moving state as a vehicle runs, a static target (for example, a traffic light) in front of the vehicle may be detected.

In a possible implementation, the first detector is controlled to receive the echo signal of the first laser signal at the first moment M times, to obtain the fourth echo signal. M is an integer greater than 1, and a value of M is predefined or preconfigured, or a value of M is related to the first distance.

M represents a detection count at the first distance. Considering a case of a single detection, the first detector may not receive an echo signal from the first distance. For example, when the first distance is large, strength of an echo signal returned from the first distance may be weak. Consequently, the first detector may not receive the echo signal returned from the first distance. Therefore, the detection count M may be set to plural, and echo signals received at the first moment across a plurality of times are accumulated as the fourth echo signal, that is, the echo signal from the first distance.

Optionally, a value of the detection count M is positively correlated with the first distance, that is, the detection count M may be adaptively changed based on the first distance. Specifically, a larger first distance indicates a larger value of the detection count M, that is, a larger quantity of accumulated detection counts; and a smaller first distance indicates a smaller value of the detection count M, that is, a smaller quantity of accumulated detection counts.

In the foregoing implementation, the first detector may receive the echo signal of the first laser signal at the first moment a plurality of times, that is, perform detection at the first distance a plurality of times. The fourth echo signal (that is, the echo signal from the first distance) obtained by accumulating echo signals received at the first moment a plurality of times is stronger, and is used to detect the target object that may exist at the first distance, so that a more accurate detection result can be obtained, thereby improving detection performance.

FIG. 9 is a diagram of detection results under different detection counts according to an embodiment of this application. As shown in FIG. 9, a target at a first distance L1 is subjected to different detection counts. For example, the detection counts are m₁, m₂, m₃, m₄, and m₅ in ascending order. As the detection count increases, resolution of a detection result increases accordingly, so that the target at the first distance L1 can be identified more accurately.

Optionally, the first laser signal emitted by the laser may illuminate an entire detection area at a time. For example, for a flash lidar, the flash lidar emits a large area of light spots or laser dot arrays to the detection area, thereby simultaneously illuminating an entire detection area.

For example, the first detector includes a plurality of detection elements, and each detection element corresponds to one sub-area in the detection area and is configured to receive an echo signal from the sub-area. When the first laser signal emitted by the laser illuminates the entire detection area at a time, all detection elements in the first detector may be turned on simultaneously.

In a possible implementation, the controller may control the laser to emit the first laser signal to the entire detection area, and control all detection elements in the first detector to receive the echo signal of the first laser signal at the first moment. Accordingly, a detection speed and a frame rate can be improved to a specific extent.

In a possible implementation, when the laser emits the first laser signal to the entire detection area, the controller starts timing, and the controller may send a control signal to all control elements in the first detector, to trigger all the detection elements in the first detector to enter a physical gated mode. In the physical gated mode, all the detection elements in the first detector are first in an off state. When a timing duration reaches a first time, all the detection elements in the first detector are simultaneously turned on, to synchronously receive the echo signal from the first distance, thereby implementing global synchronous gating.

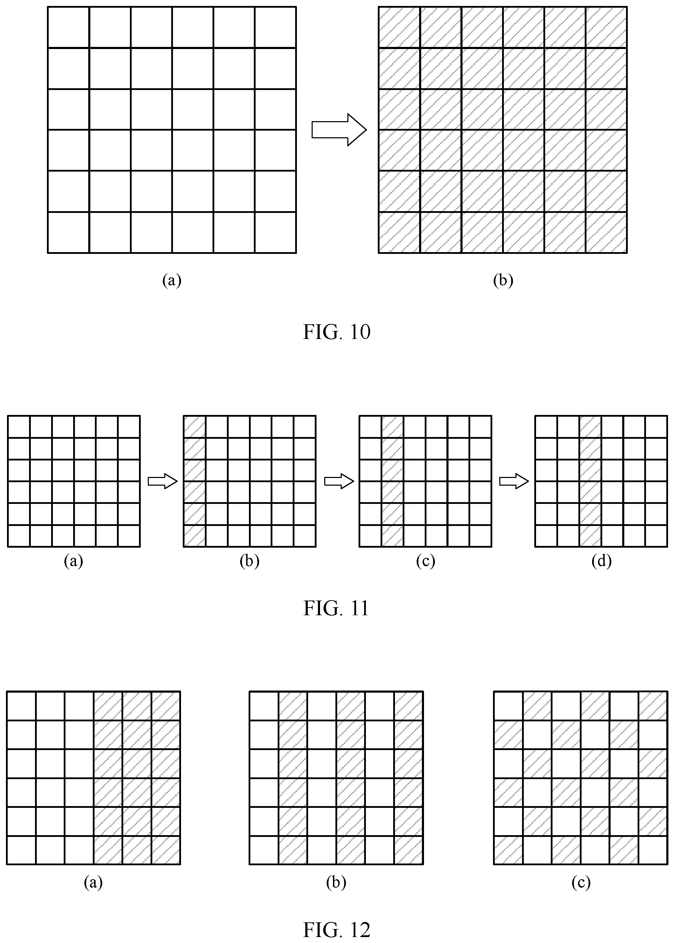

FIG. 10 is a diagram of synchronously turning on the first detector according to an embodiment of this application. The first detector is a detector of a 6×6 array, and includes 6×6 detection elements. Each grid represents one detection element. A blank grid represents that the detection element is in an off state, while a shadow grid represents that the detection element is in an on state.

For example, the laser emits the first laser signal to an entire detection area, and starts timing from an emission moment of the first laser signal. When a timing duration does not reach the first time, as shown in (a) of FIG. 10, all detection elements in the first detector are turned off. When the timing duration reaches the first time, as shown in (b) of FIG. 10, all the detection elements in the first detector are simultaneously turned on.

Optionally, the first laser signal emitted by the laser may sequentially illuminate each sub-area of the detection area. For example, for a scanning lidar, the scanning lidar sequentially emits a laser signal to each sub-area of a detection area in a scanning sequence, to sequentially illuminate each sub-area of the detection area until full-angle scanning is completed, thereby completing illumination of the entire detection area.

For example, the first detector includes a plurality of detection elements, and each detection element corresponds to one sub-area in the detection area and is configured to receive an echo signal from the sub-area. When the first laser signal emitted by the laser sequentially illuminates each sub-area of the detection area, different detection elements in the first detector may be turned on in a time-division manner.

In a possible implementation, the controller may control the laser to sequentially emit the first laser signal to each scanning field of view according to a scanning sequence, and control a detection element corresponding to each scanning field of view in the first detector to sequentially receive the echo signal of the first laser signal at the first moment according to the scanning sequence. Accordingly, the laser signal used for detection may be more focused, thereby helping improve accuracy of a detection result.

The scanning field of view may be understood as a sub-area in the detection area, and the scanning sequence may be predefined or preconfigured. For example, for a scanning multi-line lidar, multi-line light beams emitted by the scanning multi-line lidar are arranged vertically, and a scanning sequence proceeds horizontally from left to right (or from right to left). When the vertically arranged multi-line light beams scan across a horizontal direction, sub-areas of the detection area that are divided based on the horizontal direction are sequentially illuminated.

In a possible implementation, when the laser emits a first laser signal to a specific sub-area, the controller starts timing, and the controller may send a control signal to some control elements that are in the first detector and that correspond to the sub-area, to trigger the some control elements to enter a physical gated mode. In the physical gated mode, the some detection elements are first in an off state. When a timing duration reaches the first time, the some detection elements are turned on to receive an echo signal from the first distance. Accordingly, as the laser sequentially emits the first laser signal to each sub-area, some control elements that are in the first detector and that correspond to each sub-area are turned on in a time-division manner, to sequentially perform gating.

FIG. 11 is a diagram of turning on the first detector in a time-division manner according to an embodiment of this application. The first detector is a detector of a 6×6 array, and includes 6×6 detection elements. Each grid represents one detection element. A blank grid represents that the detection element is in an off state, while a shadow grid represents that the detection element is in an on state. Each column of detection elements corresponds to one sub-area.

For example, the laser emits the first laser signal to a sub-area corresponding to a first column of detection elements in the first detector, and starts timing from an emission moment of the first laser signal. When a timing duration does not reach the first time, as shown in (a) of FIG. 11, all detection elements in the first detector are turned off. When the timing duration reaches the first time, as shown in (b) of FIG. 11, the first column of detection elements in the first detector are turned on, and the other columns of detection elements are turned off. Similarly, the laser emits the first laser signal to a sub-area corresponding to a second column of detection elements in the first detector, and starts timing from an emission moment of the first laser signal. When a timing duration reaches the first time, as shown in (c) in FIG. 11, the second column of detection elements in the first detector are turned on, and the other columns of detection elements are turned off. The laser emits the first laser signal to a sub-area corresponding to a third column of detection elements in the first detector, and starts timing from an emission moment of the first laser signal. When a timing duration reaches the first time, as shown in (d) in FIG. 11, the third column of detection elements in the first detector are turned on, and the other columns of detection elements are turned off.

In a possible implementation, the first detector includes a plurality of detection elements. The controller may control a first detection element group in the first detector to receive the echo signal of the first laser signal at the first moment, to obtain the fourth echo signal. The first detection element group includes at least one of the plurality of detection elements. The controller may further control a second detection element group in the first detector to continuously receive the echo signal of the first laser signal from the emission moment of the first laser signal, to obtain a fifth echo signal. The second detection element group includes at least one of the plurality of detection elements, and the second detection element group does not overlap with detection elements in the first detection element group.

The first detection element group is configured to receive the echo signal of the first laser signal at the first moment, to obtain the echo signal (that is, the fourth echo signal) from the first distance. In other words, a working mode of the first detection element group is a physical gated mode. The second detection element group is configured to continuously receive the echo signal of the first laser signal from the emission moment of the first laser signal, to obtain the echo signal (denoted as the fifth echo signal for differentiation) returned from the entire detection area (covering a full range). In other words, a working mode of the second detection element group is a free mode. In this way, the first detection element group and the second detection element group in the first detector run in different working modes, so that the first detector can run in two working modes at the same time and can freely switch between the two working modes.

For example, all detection elements in the first detector are divided into the first detection element group and the second detection element group. Each detection element in the first detector may be considered as a pixel, so that the first detector may be considered as a pixel region. The pixel region is divided into two different sub-pixel regions, which respectively correspond to the first detection element group and the second detection element group. A specific division manner is not limited in this embodiment of this application.

FIG. 12 is a diagram of division manners of the first detector according to an embodiment of this application. The first detector is a detector of a 6×6 array, and includes 6×6 detection elements. Each grid (or referred to as a pixel) represents one detection element. A shadow region represents the first detection element group, and a blank region represents the second detection element group. For example, a division manner shown in (a) of FIG. 12 is region-based division, a division manner shown in (b) of FIG. 12 is column-wise interleaved division, and a division manner shown in (c) of FIG. 12 is pixel-wise interleaved division.

In the foregoing implementation, the first detector may simultaneously run in a plurality of working modes in different areas. Specifically, the first detector may perform comprehensive detection on an entire detection area in a free mode, and may also perform enhanced detection at a specific distance in a gated mode, so that a plurality of detection requirements can be met simultaneously, thereby improving detection performance.

In a possible implementation, after controlling the first detector to receive the echo signal of the first laser signal at the first moment to obtain the fourth echo signal, the controller may further control the laser to emit a second laser signal, and control the first detector to continuously receive an echo signal of the second laser signal from an emission moment of the second laser signal, to obtain a sixth echo signal.

The emission moment of the second laser signal is a moment at which the laser emits the second laser signal. The controller may control the first detector to be turned on from the emission moment of the second laser signal, and keep the first detector in an on state (that is, in an always-on state), so that the first detector may continuously receive the echo signal of the second laser signal from the emission moment of the second laser signal, to obtain the echo signal (denoted as the sixth echo signal for differentiation) returned from the entire detection area.

In a possible implementation, the controller may send a control signal to the laser, to control the laser to emit the second laser signal to the detection area. When the laser emits the second laser signal, that is, at the emission moment of the second laser signal, the controller starts timing, and the controller may send a control signal to the first detector, to trigger the first detector to enter a free mode. In the free mode, the first detector is in an always-on state, thereby continuously receiving the echo signal of the second laser signal.

In the foregoing implementation, the first detector may switch between different working modes in a time-division or alternating manner. For example, the first detector may switch to the free mode after running in the physical gated mode for a specific time or for a specific count. For another example, the first detector may switch to the physical gated mode after running in the free mode for a specific time or for a specific count.

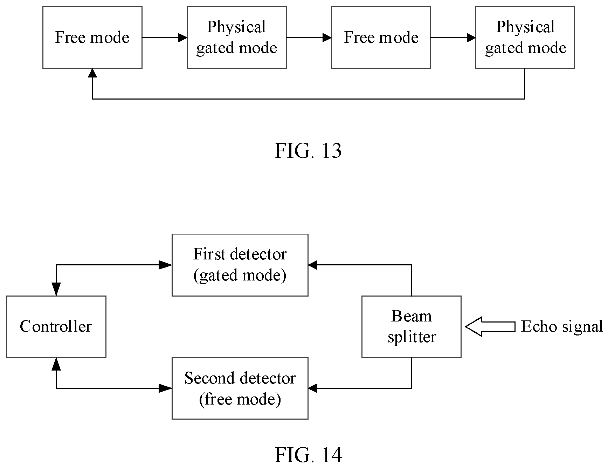

FIG. 13 is a diagram of working mode switching of the first detector according to an embodiment of this application. As shown in FIG. 13, the first detector alternately runs in the free mode and the physical gated mode, so that the first detector can flexibly adapt to a change in a detection requirement.

In a possible implementation, the controller may further control a second detector to continuously receive the echo signal of the first laser signal from the emission moment of the first laser signal, to obtain a seventh echo signal. A field of view of the second detector is aligned with that of the first detector.

On the basis of performing fine detection at the first distance by using the first detector, the second detector is introduced, and is configured to perform comprehensive detection on the entire detection area. That the field of view of the second detector is aligned with that of the first detector may be understood as that the second detector and the first detector perform detection on a same detection area, and detection data of the two detectors may be fused.

FIG. 14 is a diagram of joint detection by the first detector and the second detector according to an embodiment of this application. As shown in FIG. 14, the controller controls the first detector and the second detector to respectively run in the gated mode and the free mode. An echo signal of the first laser signal first passes through a beam splitter and is divided into two signals, which then enter the first detector and the second detector, respectively.

Specifically, the controller may control the second detector to be turned on from the emission moment of the first laser signal, and keep the second detector in an on state (that is, in an always-on state), so that the second detector may continuously receive the echo signal of the first laser signal from the emission moment of the first laser signal, to obtain the echo signal (denoted as a seventh echo signal for differentiation) returned from the entire detection area.

In a possible implementation, when the laser emits the first laser signal, that is, at the emission moment of the first laser signal, the controller starts timing, and the controller may send a control signal to the second detector, to trigger the second detector to enter a free mode. In the free mode, the second detector is in the always-on state, thereby continuously receiving the echo signal of the first laser signal.

In the foregoing implementation, the second detector may perform comprehensive detection on the entire detection area in the free mode, and the first detector may perform enhanced detection at a specific distance in the gated mode. In combination with detection data of the two detectors, a more comprehensive and accurate detection result can be obtained.

The following is described by using an example in which this embodiment of this application is applied to a self-driving scenario. In the self-driving scenario, the detection apparatus may be a vehicle-mounted lidar on a self-driving vehicle.

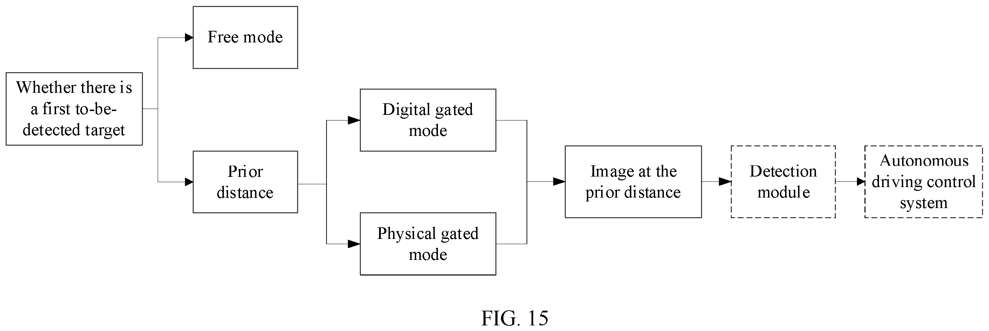

FIG. 15 is a schematic flowchart of the detection method according to an embodiment of this application. The detection method may include the following steps.

Step 1: The vehicle-mounted lidar determines whether there is a first to-be-detected target in the detection area. Optionally, the first to-be-detected target is an extended target. If there is no first to-be-detected target in the detection area, step 2 is performed; or if there is a first to-be-detected target in the detection area, step 3 to step 5 are performed.

Step 2: The vehicle-mounted lidar enters a free mode for detection.

Step 3: The vehicle-mounted lidar obtains a prior distance, where the prior distance indicates a distance corresponding to the first to-be-detected target. Optionally, the vehicle-mounted lidar may further enhance an echo signal by using a signal processing method such as multi-echo accumulation and gain control, to extract the prior distance.

Step 4: The vehicle-mounted lidar enters a digital gated mode or a physical gated mode to perform detection, and obtains an echo signal from the prior distance.

Step 5: The vehicle-mounted lidar generates an image at the prior distance based on the echo signal from the prior distance.

Then, the vehicle-mounted lidar may provide the image at the prior distance for the detection module. The detection module may be a downstream detection and recognition network, and is configured to: perform feature extraction and target recognition on the image at the prior distance; determine a specific classification of the first to-be-detected target and whether the first to-be-detected target affects traveling of the vehicle; and feed back a determining result to an autonomous driving control system, so that the autonomous driving control system performs corresponding control on traveling of the vehicle.

It should be understood that, for specific descriptions of step 1 to step 5, refer to related descriptions in the foregoing embodiments. Details are not described herein again. According to the foregoing embodiment, the vehicle-mounted lidar can switch between the free mode and the gated mode. For example, the vehicle-mounted lidar runs in the free mode in a conventional ranging scenario, and runs in the gated mode in a scenario in which there is a first to-be-detected target, so that detection requirements in different scenarios can be met. In addition, the vehicle-mounted lidar can reuse a same hardware structure in different working modes, thereby reducing system complexity.

The foregoing describes in detail the methods in embodiments of this application. The following describes apparatus embodiments in embodiments of this application.

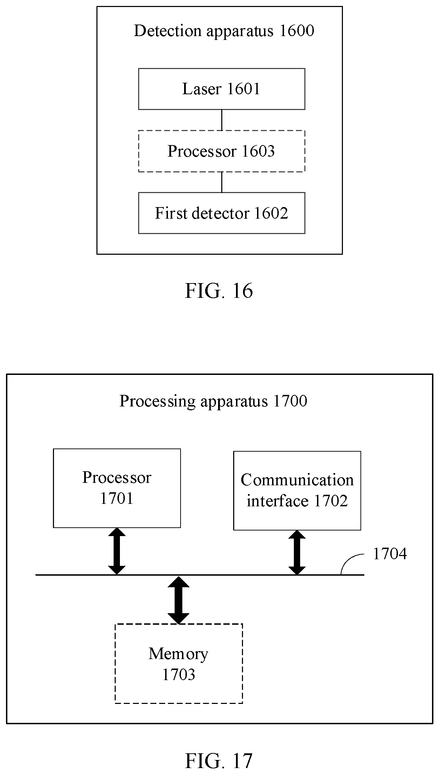

FIG. 16 is a diagram of a structure of a detection apparatus according to an embodiment of this application. Optionally, the detection apparatus 1600 may be an independent device (for example, one or more of a lidar, a handheld terminal, a vehicle, or a robot), or may be a component (for example, a chip, a software module, or a hardware module) in an independent device.

The detection apparatus 1600 is configured to implement the foregoing detection method, for example, the detection method in the embodiment shown in FIG. 2 or FIG. 4.

The detection apparatus 1600 may include a laser 1601 and a first detector 1602. The laser 1601 is configured to emit a laser signal, and the first detector 1602 is configured to receive an echo signal. Optionally, the detection apparatus 1600 may further include at least one processor 1603.

In a possible design, the first detector 1602 or the at least one processor 1603 is configured to: control the laser to emit a first laser signal; obtain a first echo signal of the first laser signal; determine a first to-be-detected target based on the first echo signal; and determine a second echo signal based on the first echo signal and the first to-be-detected target, where the second echo signal is an echo signal from a first distance corresponding to the first to-be-detected target.

In a possible implementation, the first detector 1602 or the at least one processor 1603 is further configured to: control the first detector to continuously receive an echo signal of the first laser signal from an emission moment of the first laser signal, to obtain the first echo signal. The first echo signal includes a plurality of echo signals corresponding to different times.

In a possible implementation, the first detector 1602 or the at least one processor 1603 is further configured to: determine a first time based on the plurality of echo signals corresponding to the different times, where an echo signal corresponding to the first time includes a characteristic signal, and the characteristic signal includes at least one of a peak signal, a broadened signal, and a distorted signal; and determine the first to-be-detected target based on the first time, where the first distance corresponding to the first to-be-detected target is related to the first time.

In a possible implementation, the first detector 1602 or the at least one processor 1603 is further configured to: extract the echo signal corresponding to the first time from the plurality of echo signals corresponding to the different times, to obtain the second echo signal.

In a possible implementation, the first detector 1602 or the at least one processor 1603 is further configured to: generate a first image based on the second echo signal, where the first image is an image at the first distance, and the first image identifies the first to-be-detected target.

In a possible implementation, the first detector 1602 or the at least one processor 1603 is further configured to: determine a third echo signal based on the first echo signal and the first to-be-detected target, where the third echo signal is an echo signal from a second distance, and a distance difference between the second distance and the first distance is less than a first distance difference.

In another possible design, the first detector 1602 or the at least one processor 1603 is configured to: determine a first to-be-detected target; control the laser to emit a first laser signal; and control the first detector to receive an echo signal of the first laser signal at a first moment, to obtain a fourth echo signal. The first moment is related to an emission moment of the first laser signal and a first distance corresponding to the first to-be-detected target, and the fourth echo signal is an echo signal from the first distance corresponding to the first to-be-detected target.

In a possible implementation, the first moment and the emission moment of the first laser signal are separated by a first time, and the first time is a time of flight of a laser signal corresponding to the first distance.

In a possible implementation, when the first detector is in a moving state, the first moment is further related to a moving direction and a moving speed of the first detector.

In a possible implementation, the first detector 1602 or the at least one processor 1603 is further configured to: control the first detector to receive the echo signal of the first laser signal at the first moment M times, to obtain the fourth echo signal, where M is an integer greater than 1, and a value of M is predefined or preconfigured, or a value of M is related to the first distance.

In a possible implementation, the first detector 1602 or the at least one processor 1603 is further configured to: control the laser to sequentially emit the first laser signal to each scanning field of view according to a scanning sequence; and control a detection element corresponding to each scanning field of view in the first detector to sequentially receive the echo signal of the first laser signal at the first moment according to the scanning sequence, to obtain the fourth echo signal.

In a possible implementation, the first detector includes a plurality of detection elements. The first detector 1602 or the at least one processor 1603 is further configured to: control a first detection element group in the first detector to receive the echo signal of the first laser signal at the first moment, to obtain the fourth echo signal, where the first detection element group includes at least one of the plurality of detection elements; and control a second detection element group in the first detector to continuously receive the echo signal of the first laser signal from the emission moment of the first laser signal, to obtain a fifth echo signal, where the second detection element group includes at least one of the plurality of detection elements, and the second detection element group does not overlap with detection elements in the first detection element group.

In a possible implementation, the first detector 1602 or the at least one processor 1603 is further configured to: control the laser to emit a second laser signal; and controlling the first detector to continuously receive an echo signal of the second laser signal from an emission moment of the second laser signal, to obtain a sixth echo signal.

In a possible implementation, the first detector 1602 or the at least one processor 1603 is further configured to: controlling a second detector to continuously receive the echo signal of the first laser signal from the emission moment of the first laser signal, to obtain a seventh echo signal, where a field of view of the second detector is aligned with that of the first detector.

In a possible implementation, the first detector 1602 or the at least one processor 1603 is further configured to: generate a second image based on the fourth echo signal, where the second image is an image at the first distance, and the second image identifies the first to-be-detected target.

In a possible implementation, the first detector 1602 or the at least one processor 1603 is further configured to: control the first detector to receive the echo signal of the first laser signal at a second moment, to obtain an eighth echo signal. The second moment is related to the emission moment of the first laser signal and a second distance, a distance difference between the second distance and the first distance is less than a first distance difference, and the eighth echo signal is an echo signal from the second distance.

In a possible implementation, the first detector 1602 or the at least one processor 1603 is further configured to: obtain related information in a detection area; identify, based on the related information, whether there is a target object in the detection area; and determine the first to-be-detected target when identifying that there is a target object in the detection area.

In a possible implementation, the first detector 1602 or the at least one processor 1603 is further configured to: obtain a preliminary detection result indicating whether there is a target object in the detection area; and determine the first to-be-detected target when the preliminary detection result indicates that there is a target object in the detection area.

FIG. 17 is a diagram of a structure of a processing apparatus according to an embodiment of this application. Optionally, the processing apparatus 1700 may be an independent device (for example, one or more of a lidar, a handheld terminal, a vehicle, or a robot), or may be a component (for example, a chip, a software module, or a hardware module) in an independent device.

The processing apparatus 1700 may include at least one processor 1701 and a communication interface 1702. Further, optionally, the processing apparatus 1700 may further include at least one memory 1703. Further optionally, the processing apparatus 1700 may further include a bus 1704. The processor 1701, the communication interface 1702, and the memory 1703 are connected through the bus 1704.

The processor 1701 is a module for performing an arithmetic operation and/or a logical operation, and may specifically include one or a combination of processing modules such as a central processing unit (central processing unit, CPU), an application processor (application processor, AP), a time-to-digital converter (time-to-digital converter, TDC), a filter, a graphics processor (graphics processing unit, GPU), a microprocessor (microprocessor unit, MPU), an application-specific integrated circuit (application-specific integrated circuit, ASIC), an image signal processor (image signal processor, ISP), a digital signal processor (digital signal processor, DSP), a field programmable logic gate array (field programmable gate array, FPGA), a complex programmable logic device (complex programmable logic device, CPLD), a coprocessor (assisting the central processing unit in completing corresponding processing and application), a microcontroller unit (microcontroller unit, MCU), and a neural-network processing unit (neural-network processing unit, NPU).

The communication interface 1702 may be configured to provide an information input or output for the at least one processor; and/or the communication interface 1702 may be configured to receive data sent from the outside and/or send data to the outside. The communication interface 1702 may be an interface of a wired link, including an Ethernet cable or the like; or may be an interface of a wireless link (Wi-Fi, Bluetooth, universal wireless transmission, an in-vehicle short-range communication technology, another short-range wireless communication technology, and the like).

The memory 1703 is configured to provide storage space, and the storage space may store data such as an operating system and a computer program. The memory 1703 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The processing apparatus 1700 is configured to implement the foregoing detection method, for example, the detection method in the embodiment shown in FIG. 2 or FIG. 4.

In a possible design, the at least one processor 1701 may be a processor (referred to as a dedicated processor for ease of differentiation) specially configured to perform these methods, or may be a processor that executes these methods by invoking a computer program, for example, a general-purpose processor. Optionally, the at least one processor 1701 may further include both a dedicated processor and a general-purpose processor.

In a possible design, the at least one processor 1701 in the processing apparatus 1700 is configured to invoke a computer program stored in the at least one memory 1703, to perform the foregoing detection method, for example, the detection method in the embodiment shown in FIG. 2 or FIG. 4.

In a possible design, the processing apparatus 1700 may be one or more of apparatuses such as the detection apparatus, the controller, or the processor in the foregoing embodiments, or may be a component (for example, a chip, a software module, or a hardware module) in an apparatus such as the detection apparatus, the controller, or the processor.

The processing apparatus 1700 may control a laser and a detector. Optionally, the processing apparatus 1700 belongs to a detection apparatus, and the detection apparatus may further include a laser and a detector, or the processing apparatus 1700 may be connected to the laser and the detector.

An embodiment of this application further provides a terminal. The terminal is configured to implement the foregoing detection method, for example, the detection method in the embodiment shown in FIG. 2 or FIG. 4.

In a possible design, the terminal includes the foregoing detection apparatus, for example, the detection apparatus shown in FIG. 1 or FIG. 16, and/or the terminal includes the foregoing processing apparatus, for example, the processing apparatus shown in FIG. 17.

Optionally, the terminal may be a terminal such as a vehicle, an uncrewed aerial vehicle, or a robot.

An embodiment of this application provides a chip. The chip includes a processor. The processor is configured to execute a computer program or instructions. When executing the computer program or the instructions, the processor implements the foregoing detection method, for example, the detection method in the embodiment shown in FIG. 2 or FIG. 4. Optionally, the chip further includes a communication interface. The communication interface is configured to provide an input/output for the processor, and/or the communication interface is configured to send and/or receive data.

An embodiment of this application provides a computer-readable storage medium. The computer-readable storage medium stores a computer program or instructions. When the computer program or the instructions are executed, the foregoing detection method, for example, the detection method in the embodiment shown in FIG. 2 or FIG. 4, is implemented.

An embodiment of this application provides a computer program product. The computer program product includes a computer program or instructions. When the computer program or the instructions are executed, the foregoing detection method, for example, the detection method in the embodiment shown in FIG. 2 or FIG. 4, is implemented.

It should be noted that in this application, the term such as "example" or "for example" is used to represent giving an example, an illustration, or a description. Any embodiment or design described by "example" or "for example" in this application should not be construed as being more preferred or having more advantages than another embodiment or design. To be precise, use of the terms such as "example" or "for example" is intended to present a related concept in a specific manner.

In embodiments of this application, "at least one" means one or more, and "a plurality of" means two or more. "At least one of the following" or a similar expression means any combination of these items, including any combination of a single item or a plurality of items. For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects.

In embodiments of this application, according to the context, the term "when" may be interpreted as a meaning of "if", "after", "in response to determining", or "in response to detecting".

In addition, unless otherwise specified, ordinal numbers such as "first" and "second" are used in embodiments of this application to distinguish between a plurality of objects, but are not used to limit a sequence, a time sequence, priorities, or importance degrees of the plurality of objects. For example, the first echo signal and the second echo signal are merely for ease of description, but do not indicate differences in sources, sequences, importance degrees, and the like of the first echo signal and the second echo signal.

The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

## Claims

1. A detection method, comprising:
controlling a laser to emit a first laser signal;
obtaining a first echo signal of the first laser signal;
determining a first to-be-detected target based on the first echo signal; and
determining a second echo signal based on the first echo signal and the first to-be-detected target, wherein the second echo signal is an echo signal from a first distance corresponding to the first to-be-detected target.

2. The method according to claim 1, wherein obtaining the first echo signal of the first laser signal comprises:
controlling a first detector to continuously receive an echo signal of the first laser signal from an emission moment of the first laser signal, to obtain the first echo signal, wherein the first echo signal comprises a plurality of echo signals corresponding to different times.

3. The method according to claim 2, wherein determining the first to-be-detected target based on the first echo signal comprises:
determining a first time based on the plurality of echo signals corresponding to the different times, wherein an echo signal corresponding to the first time comprises a characteristic signal, and the characteristic signal comprises at least one of a peak signal, a broadened signal, and a distorted signal; and
determining the first to-be-detected target based on the first time, wherein the first distance corresponding to the first to-be-detected target is related to the first time.

4. The method according to claim 3, wherein determining the second echo signal based on the first echo signal and the first to-be-detected target comprises:
extracting the echo signal corresponding to the first time from the plurality of echo signals corresponding to the different times, to obtain the second echo signal.

5. The method according to any one of claims 1 to 4, further comprising:
generating a first image based on the second echo signal, wherein the first image is an image at the first distance, and the first image identifies the first to-be-detected target.

6. The method according to any one of claims 1 to 5, further comprising:
determining a third echo signal based on the first echo signal and the first to-be-detected target, wherein the third echo signal is an echo signal from a second distance, and a distance difference between the second distance and the first distance is less than a first distance difference.

7. A detection method, comprising:
determining a first to-be-detected target;
controlling a laser to emit a first laser signal; and
controlling a first detector to receive an echo signal of the first laser signal at a first moment, to obtain a fourth echo signal, wherein the first moment is related to an emission moment of the first laser signal and a first distance corresponding to the first to-be-detected target, and the fourth echo signal is an echo signal from the first distance corresponding to the first to-be-detected target.

8. The method according to claim 7, wherein the first moment and the emission moment of the first laser signal are separated by a first time, and the first time is a time of flight of a laser signal corresponding to the first distance.

9. The method according to claim 7, wherein when the first detector is in a moving state, the first moment is further related to a moving direction and a moving speed of the first detector.

10. The method according to any one of claims 7 to 9, wherein controlling the first detector to receive the echo signal of the first laser signal at the first moment, to obtain the fourth echo signal comprises:
controlling the first detector to receive the echo signal of the first laser signal at the first moment M times, to obtain the fourth echo signal, wherein M is an integer greater than 1, and a value of M is predefined or preconfigured, or a value of M is related to the first distance.

11. The method according to any one of claims 7 to 10, wherein controlling the laser to emit the first laser signal comprises:
controlling the laser to sequentially emit the first laser signal to each scanning field of view according to a scanning sequence; and
controlling the first detector to receive the echo signal of the first laser signal at the first moment, to obtain the fourth echo signal comprises:
controlling a detection element corresponding to each scanning field of view in the first detector to sequentially receive the echo signal of the first laser signal at the first moment according to the scanning sequence, to obtain the fourth echo signal.

12. The method according to any one of claims 7 to 11, wherein the first detector comprises a plurality of detection elements; and
controlling the first detector to receive the echo signal of the first laser signal at the first moment, to obtain the fourth echo signal comprises:
controlling a first detection element group in the first detector to receive the echo signal of the first laser signal at the first moment, to obtain the fourth echo signal, wherein the first detection element group comprises at least one of the plurality of detection elements; and
the method further comprises:
controlling a second detection element group in the first detector to continuously receive the echo signal of the first laser signal from the emission moment of the first laser signal, to obtain a fifth echo signal, wherein the second detection element group comprises at least one of the plurality of detection elements, and the second detection element group does not overlap with detection elements in the first detection element group.

13. The method according to any one of claims 7 to 11, wherein after controlling the first detector to receive the echo signal of the first laser signal at the first moment, to obtain the fourth echo signal, the method further comprises:
controlling the laser to emit a second laser signal; and
controlling the first detector to continuously receive an echo signal of the second laser signal from an emission moment of the second laser signal, to obtain a sixth echo signal.

14. The method according to any one of claims 7 to 13, further comprising:
controlling a second detector to continuously receive the echo signal of the first laser signal from the emission moment of the first laser signal, to obtain a seventh echo signal, wherein a field of view of the second detector is aligned with that of the first detector.

15. The method according to any one of claims 7 to 14, further comprising:
generating a second image based on the fourth echo signal, wherein the second image is an image at the first distance, and the second image identifies the first to-be-detected target.

16. The method according to any one of claims 7 to 15, further comprising:
controlling the first detector to receive the echo signal of the first laser signal at a second moment, to obtain an eighth echo signal, wherein
the second moment is related to the emission moment of the first laser signal and a second distance, a distance difference between the second distance and the first distance is less than a first distance difference, and the eighth echo signal is an echo signal from the second distance.

17. A detection apparatus, comprising a laser, a first detector, and at least one processor, wherein
the laser is configured to emit a laser signal;
the first detector is configured to receive an echo signal; and
the at least one processor is connected to the laser and the first detector, and the at least one processor is configured to perform the method according to any one of claims 1 to 6 or the method according to any one of claims 7 to 16.

18. A detection apparatus, comprising a laser and a first detector, wherein
the laser is configured to emit a laser signal;
the first detector is configured to receive an echo signal; and
the first detector is further configured to perform the method according to any one of claims 1 to 6 or the method according to any one of claims 7 to 16.

19. A processing apparatus, wherein the processing apparatus comprises at least one processor and a communication interface, the communication interface is configured to provide an instruction or data input and/or output for the at least one processor, and the at least one processor is configured to perform the method according to any one of claims 1 to 6 or the method according to any one of claims 7 to 16.

20. A terminal, wherein the terminal comprises the detection apparatus according to claim 17, or comprises the detection apparatus according to claim 18, or comprises the processing apparatus according to claim 19.

21. The terminal according to claim 20, wherein the terminal is a vehicle, an uncrewed aerial vehicle, or a robot.

22. A computer-readable storage medium, wherein the computer-readable storage medium stores a computer program or instructions, and when the computer program or the instructions are executed, the method according to any one of claims 1 to 6 or the method according to any one of claims 7 to 16 is implemented.
